(19) Europäisches Patentamt
European Patent Office
Office européen des brevets

(11) **EP 4 737 992 A1**

(12) **EUROPEAN PATENT APPLICATION**
published in accordance with Art. 153(4) EPC

(43) Date of publication:
**06.05.2026 Bulletin 2026/19**

(21) Application number: **23943605.8**

(22) Date of filing: **28.06.2023**

(51) International Patent Classification (IPC):
*G02F 1/05* (2006.01)

(52) Cooperative Patent Classification (CPC):
**G02F 1/05**

(86) International application number:
**PCT/JP2023/023921**

(87) International publication number:
**WO 2025/004207 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NIKON CORPORATION
Tokyo 140-8601 (JP)**

(72) Inventor: **OKAZAKI, Masahide
Tokyo 108-6290 (JP)**

(74) Representative: **Hoffmann Eitle
Patent- und Rechtsanwälte PartmbB
Arabellastraße 30
81925 München (DE)**

(54) **SPATIAL LIGHT MODULATION ELEMENT, OPTICAL UNIT, AND LIGHT PROCESSING DEVICE**

(57)     A spatial light modulation element (100) comprises: an optical member (110) on which processing light traveling in a Z direction is incident as incident light and which is formed using a ferroelectric material having light transmittance; positive and negative electrodes (120, 125) arranged on an arrangement surface (113) of an optical member (110) in an X direction; and wirings (a positive wire (130) and a ground wire (135)) through which a voltage is applied to the positive electrode (120) so as to create a potential difference between the positive and negative electrodes (120, 125). When the potential difference is generated between the positive and negative electrodes (120, 125), a refractive index in the optical member (110) changes in the X direction.

*FIG.7*

EP 4 737 992 A1

## Description

TECHNICAL FIELD

The present invention relates to a spatial light modulation element, an optical unit, and a light processing device.

TECHNICAL BACKGROUND

There have been known electro-optic spatial light modulation elements including a spatial light modulation element (for example, see Patent literature 1) in which electrodes are provided on one surface of an optical member that propagates light, and a spatial light modulation element in which electrodes are provided on both surfaces of an optical member that propagates light. These spatial light modulation elements are required to modulate light at high speed.

PRIOR ARTS LIST

PATENT DOCUMENT

Patent literature 1: U.S. Patent No. 6,169,565

SUMMARY OF THE INVENTION

A spatial light modulation element according to a first present invention modulates incident light and exits the light, comprising: an optical member on which the incident light is incident traveling along a first axis and which is formed using a ferroelectric material having light transmittance; first and second electrodes that are arranged on a surface of the optical member along a second axis intersecting with the first axis; and a wiring through which a voltage is applied to at least one of the first and second electrodes so as to create a potential difference between the first and second electrodes.

A spatial light modulation element according to a second present invention modulates incident light and exits the light, comprising: an optical member on which the incident light is incident traveling along a first axis and which is formed using a ferroelectric material having light transmittance; and first and second electrodes that are arranged on a surface of the optical member along a second axis intersecting with the first axis, and when a potential difference is generated between the first and second electrodes, a refractive index in the optical member changes along the second axis.

An optical unit according to the present invention comprises: the above-described spatial light modulation element; and an optical system on which diffracted light exited from the spatial light modulation element is incident, and the optical system includes a light-attenuating part that attenuates at least one of zeroth order diffracted light and diffracted light of an order different from the zeroth order diffracted light in the diffracted light.

A light processing device according to the present invention processes an object using processing light emitted from a light source, comprising: the above-described optical unit; and an irradiation device that irradiates the object with the processing light emitted from the light source through the optical unit.

BRIEF DESCRIPTION OF THE DRAWINGS

FIG. 1 is a schematic configuration diagram showing a light processing device;

FIG. 2 is a cross-sectional view showing a part of the light processing device;

FIG. 3 is a schematic diagram of a spatial light modulation element unit as viewed from an incident plane;

FIG. 4 is a front view of a lens array;

FIG. 5 is a schematic configuration diagram showing a first modified example of the light processing device;

FIG. 6 is a schematic configuration diagram showing a second modified example of the light processing device;

FIG. 7 is a plan view of a spatial light modulation element according to a first embodiment;

FIG. 8 is a plan view showing a state in which processing light is incident on the spatial light modulation element according to the first embodiment;

FIG. 9 is a side view of the spatial light modulation element according to the first embodiment;

FIG. 10 is a cross-sectional view of the spatial light modulation element according to the first embodiment;

FIG. 11 is a plan view of a conventional spatial light modulation element;

FIG. 12 is a side view of the conventional spatial light modulation element;

FIG. 13 is a cross-sectional view of the conventional spatial light modulation element;

FIG. 14 is a cross-sectional view showing a case where a distance between electrodes is narrowed in the conventional spatial light modulation element;

FIG. 15 is a cross-sectional view showing a case where a distance between electrodes is widened in the conventional spatial light modulation element;

FIG. 16 is a side view showing a first modified example of the spatial light modulation element according to the first embodiment;

FIG. 17 is a side view showing a second modified example of the spatial light modulation element according to the first embodiment;

FIG. 18 is a plan view of a spatial light modulation element according to a second embodiment;

FIG. 19 is a plan view showing a state in which processing light is incident on the spatial light modulation element according to the second embodiment;

FIG. 20 is a side view of the spatial light modulation element according to the second embodiment;

FIG. 21 is a cross-sectional view of the spatial light modulation element according to the second embodiment;

FIG. 22 is a plan view of a spatial light modulation element according to a third embodiment;

FIG. 23 is a side view of the spatial light modulation element according to the third embodiment;

FIG. 24 is a plan view showing a modified example of the spatial light modulation element according to the third embodiment;

FIG. 25 is a plan view of a spatial light modulation element according to a fourth embodiment;

FIG. 26 is a side view of the spatial light modulation element according to the fourth embodiment;

FIG. 27 is a plan view showing a modified example of the spatial light modulation element according to the fourth embodiment;

FIG. 28 is a plan view of a spatial light modulation element according to a fifth embodiment; and

FIG. 29 is a plan view of a spatial light modulation element according to a sixth embodiment.

DESCRIPTION OF THE EMBODIMENTS

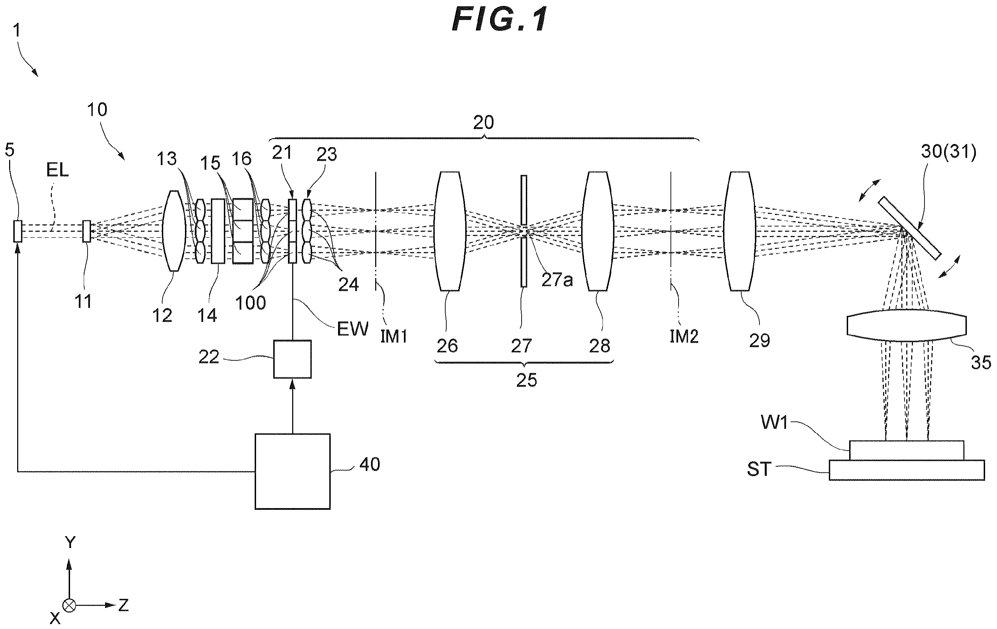

Preferred embodiments will be described below. First, an optical unit and a light processing device comprising a spatial light modulation element according to each of the embodiments will be described with reference to FIGS. 1 to 4. In the description of the light processing device, directions indicated by arrows in FIG. 1 may be referred to as an X direction, a Y direction, and a Z direction, respectively. The X direction, the Y direction, and the Z direction are directions that are orthogonal to one another.

[Light processing device]

As shown in FIG. 1, a light processing device 1 comprises a light source 5, a processing optical system 10, an irradiation device 30, and a control device 40. The light processing device 1 irradiates a workpiece W1 placed at a predetermined position (for example, an upper surface of a stage ST) with a processing light EL to perform removal processing on the workpiece W1.

The light source 5 emits the processing light EL, for example, a laser light. The light source 5 may be a laser light source that emits a pulsed light as the processing light EL. In this case, the pulsed light may be pulsed light called femtosecond laser. The processing light EL may be a type of light different from laser light, as long as being capable of being irradiated onto the workpiece W1 to process the workpiece W1. Further, the processing light EL may have any wavelength range as long as being capable of being irradiated onto the workpiece W1 to process the workpiece W1. For example, the wavelength range of the processing light EL may be a wavelength range of visible light, a wavelength range of infrared light, or a wavelength range of ultraviolet light.

The processing light EL emitted from the light source 5 is incident on the processing optical system 10. The processing optical system 10 splits the processing light EL incident on the processing optical system 10 into a plurality of beams of processing light (for example, nine beams of processing light arranged three by three lengthwise and breadthwise), and exits the light toward the irradiation device 30. The plurality of beams of processing light EL exited from the processing optical system 10 are irradiated onto the workpiece W1 through a galvanometer mirror 31 and a scanning optical system 35 of the irradiation device 30. A direction along an optical axis of the processing optical system 10 is defined as the Z direction. A horizontal direction orthogonal to the Z direction may be defined as the X direction, and a direction orthogonal to the Z direction and the X direction may be defined as the Y direction.

The processing optical system 10 comprises, in order from the light source 5, a diffractive optical element 11, a collector lens 12, a collimator lens 13, an optical isolator 14, a cylindrical expander 15, a cylindrical lens 16, an optical unit 20 having a spatial light modulation function, and a collecting lens 29. The processing light EL emitted from the light source 5 is incident on the diffractive optical element 11. The diffractive optical element 11 splits the processing light EL incident on the diffractive optical element 11 into a plurality of beams of processing light depending on a diffraction phenomenon. In an example shown in FIG. 1, the diffractive optical element 11 splits the processing light EL incident on the diffractive optical element 11 into processing light EL that travels along the optical axis of the processing optical system 10 and two beams of processing light EL that travel at an angle in a $\pm$ Y direction relative to the optical axis of the processing optical system 10.

In the example shown in FIG. 1, the diffractive optical element 11 splits the processing light EL incident on the diffractive optical element 11 into three beams of processing light, but is not limited thereto. The diffractive optical element 11 may split the processing light EL incident on the diffractive optical element 11 into five beams of processing light, and may split the processing light EL incident on the diffractive optical element 11 into two or more beams of processing light.

The plurality of beams of processing light EL exited from the diffractive optical element 11 are incident on the collector lens 12. A front focal position of the collector lens 12 may be located on a grating plane of the diffractive optical element 11. The collector lens 12 makes the traveling directions of the plurality of beams of processing light EL transmitting through the collector lens 12 parallel to one another. In addition, the collector lens 12 collects each of the beams of processing light EL transmitting through the collector lens 12.

A plurality of collimator lenses 13 are arranged side by side in the Y direction in position alignment with the plurality of beams of processing light EL. When the diffractive optical element 11 splits the processing light EL into three beams of light as shown in FIG. 1, three collimator lenses 13 may be arranged side by side in the Y direction. The plurality of beams of processing light EL transmitting through the collector lens 12 are incident on the plurality of collimator lenses 13. The collimator lenses 13 convert the processing light EL transmitting through the collector lens 12 into a collimated light.

The plurality of beams of processing light EL transmitting through the collimator lenses 13 are incident on the optical isolator 14. The optical isolator 14 transmits the plurality of beams of processing light EL incident on the optical isolator 14 from the plurality of collimator lenses 13. On the other hand, the optical isolator 14 blocks the processing light EL reflected by the workpiece W1.

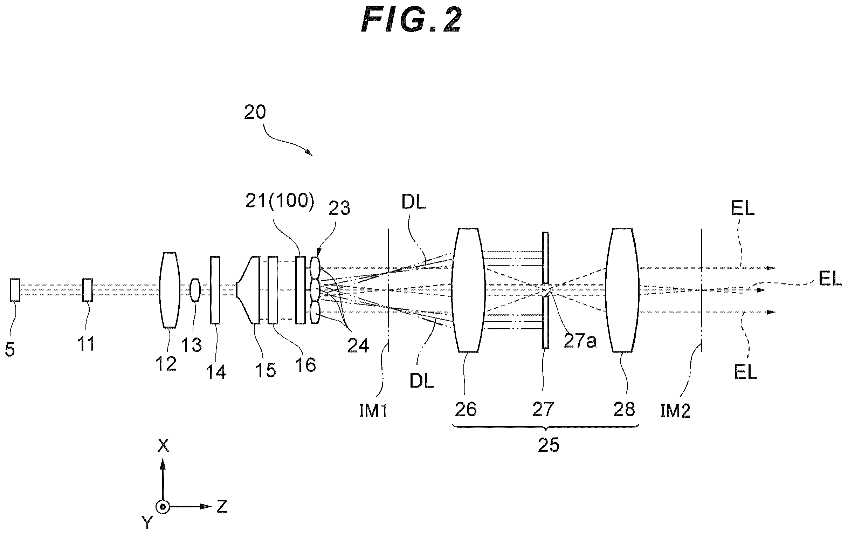

A plurality of cylindrical expanders 15 are arranged side by side in the Y direction in position alignment with the plurality of collimator lenses 13. When the diffractive optical element 11 splits the processing light EL into three beams of light as shown in FIG. 1, three cylindrical expanders 15 may be arranged side by side in the Y direction. The plurality of beams of processing light EL transmitting through the optical isolator 14 are incident on the plurality of cylindrical expanders 15. The cylindrical expanders 15 expand a width of the processing light EL transmitting through the cylindrical expanders 15 in the X direction (see FIG. 2).

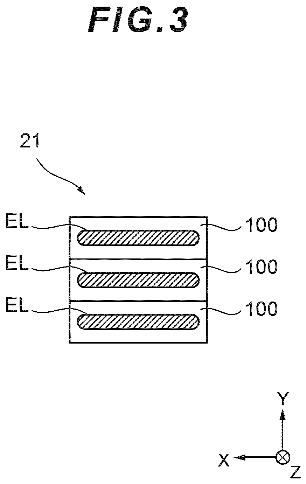

The plurality of beams of processing light EL transmitting through the plurality of cylindrical expanders 15 are incident on the cylindrical lens 16. The cylindrical lens 16 collects each of the beams of processing light EL transmitting through the cylindrical lens 16 in the Y direction. Thus, a cross-sectional shape of the processing light EL incident on the spatial light modulation element 100 of the optical unit 20 becomes an ellipse of which width in the Y direction is smaller than a width in the X direction (see FIG. 3). In addition, the processing light EL incident on the spatial light modulation element 100 and being the ellipse in the cross-sectional shape may also be referred to as a sheet-shaped processing light EL. The cylindrical expander 15 and the cylindrical lens 16 that form the beam cross-sectional shape of the processing light EL from the light source 5 into an elliptical shape may be referred to as a shaping optical system.

The plurality of beams of processing light EL transmitting through the cylindrical lens 16 are incident on optical unit 20. The optical unit 20 comprises, in order from the light source 5, a spatial light modulation element unit 21, a lens array 23, and a Schlieren optical system 25. The spatial light modulation element unit 21 includes a plurality of spatial light modulation elements 100, which are stacked in the Y direction, and a drive circuit 22. The plurality of spatial light modulation elements 100 may be arranged at a rear focal position of the collector lens 12.

As shown in FIG. 1, when the diffractive optical element 11 splits the processing light EL into three beams of light, the spatial light modulation element unit 21 may include three spatial light modulation elements 100 that are stacked in the Y direction. Details of the spatial light modulation element 100 will be described below. The drive circuit 22 is electrically connected to a plurality of electrodes, which are provided on the plurality of spatial light modulation elements 100, through wiring EW, and is capable of applying a voltage to each of the electrodes of the spatial light modulation elements 100.

The plurality of beams of processing light EL transmitting through the cylindrical lens 16 are incident on the plurality of spatial light modulation elements 100. In a state where no voltage is applied to each of the electrodes of the spatial light modulation elements 100, the spatial light modulation element 100 exits the processing light EL incident on the spatial light modulation element 100 toward the lens array 23, as a zeroth order diffracted light. When a voltage is applied to each of the electrodes of the spatial light modulation elements 100, the processing light EL incident on the spatial light modulation element 100 is diffracted to generate a diffracted light of a predetermined order (for example, + 1st order or - 1st order). Furthermore, when a voltage is applied to some of the electrodes of the spatial light modulation elements 100, some of the plurality of beams of processing light EL incident on the spatial light modulation element 100 are diffracted to generate a diffracted light of a predetermined order.

For example, when a voltage is applied to an electrode located on the center side of the spatial light modulation element 100, the spatial light modulation element 100 exits diffracted light DL of a predetermined order generated by diffraction of the light of the central part out of the plurality of beams of processing light EL, which are the ellipse (sheet shape) in a cross section and are incident on the spatial light modulation element 100 as shown in FIG. 2, toward the lens array 23, and exits the light of the other part (the part on an end side in the ± X direction) of the processing light EL toward the lens array 23 as a zeroth order diffracted light. In addition, when a voltage is applied to an electrode located on the end side of the spatial light modulation element 100 in the + X direction (or the - X direction), the spatial light modulation element 100 exits a diffracted light of a predetermined order generated by diffraction of the light of the part on the end side in the + X direction (or the - X direction) out of the plurality of beams of processing light EL, which are incident on the spatial light modulation element 100, toward the lens array 23, and exits the light of the other part in the ± X direction) of the processing light EL toward the lens array 23 as a zeroth order diffracted light.

In an example shown in FIG. 2, when a voltage is applied to the electrode of the spatial light modulation element 100, two beams of diffracted light DL (for example, ± 1st order diffracted light) are exited from the spatial light modulation element 100 instead of the processing light EL (zeroth diffracted light), but the present invention is not limited thereto. For example, when a voltage is applied to the electrode of the spatial light modulation element 100, one diffracted light (for example, + 1st order diffracted light or - 1st order diffracted light) may be exited from the spatial light modulation element 100 instead of the processing light EL (zeroth diffracted light). Furthermore, the diffracted light of the predetermined order may be, for example, + 1st order diffracted light or - 1st order diffracted light, and may be a diffracted light of an order different from the zeroth order diffracted light.

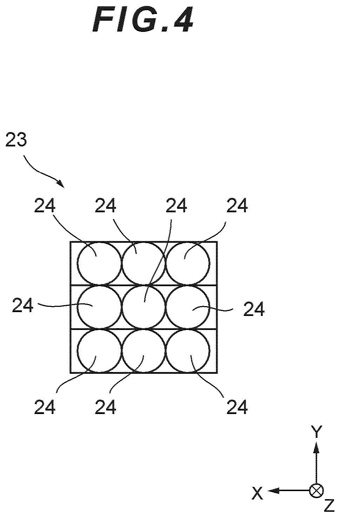

The processing light EL or the diffracted light DL exited from the plurality of spatial light modulation elements 100 is incident on the lens array 23. The lens array 23 includes a plurality of lenses 24 arranged in two directions of the X direction and the Y direction as shown in FIG. 4. Each of the lenses 24 of the lens array 23 is generally configured by a lens (anamorphic lens) having different power in the X direction and the Y direction, the plurality of lenses being arranged side by side in the Y direction in position alignment with the plurality of spatial light modulation elements 100. As shown in FIG. 1, when the diffractive optical element 11 splits the processing light EL into three beams of light, three lenses 24 of the lens array 23 may be arranged side by side in the Y direction in position alignment with the three spatial light modulation elements 100.

In addition, the plurality of lenses 24 of the lens array 23 are arranged side by side in the X direction within a width range in the X direction of the spatial light modulation element 100. In the example shown in FIGS. 2 and 4, three lenses 24 of the lens array 23 are arranged side by side in the X direction within the width range in the X direction of the spatial light modulation element 100, and are in position alignment with the electrodes of the spatial light modulation element 100 which are divided into three control groups, respectively. Thus, the lens array 23 splits the processing light EL incident on the lens array 23 into three in the X direction, and causes the light to be incident on the Schlieren optical system 25. As shown in FIG. 2, the lens array 23 causes the diffracted light DL incident on the lens array 23 to be incident on the Schlieren optical system 25. In addition, in the example shown in FIG. 2, the processing light EL exited from the lens 24 on the end side in the ± X direction of the lens array 23 is shown as a principal ray and marginal rays (upper ray and lower ray).

In the example shown in FIGS. 2 and 4, the three lenses 24 of the lens array 23 are arranged side by side in the X direction, but the present invention is not limited thereto. Five lenses 24 of the lens array 23 may be arranged side by side in the X direction within the width range in the X direction of the spatial light modulation element 100, or two or more lenses may be arranged side by side in the X direction. Furthermore, the lenses 24 of the lens array 23 may be arranged singly in the X direction, that is, may be arranged side by side in a single row in the Y direction. Furthermore, the lens array 23 may not be provided, and a position of an intermediate image located on a front focal plane of the Schlieren optical system 25 may be aligned with a position of an exit end of the spatial light modulation element 100.

As shown in FIGS. 1 and 2, the Schlieren optical system 25 comprises, in order from the light source 5, a first relay lens 26, an aperture stop 27, and a second relay lens 28. The processing light EL or the diffracted light DL transmitting through each of the lenses 24 of the lens array 23 is incident on the first relay lens 26. The first relay lens 26 collects the plurality of beams of processing light EL incident on the first relay lens 26 toward a central part of the aperture stop 27.

The aperture stop 27 is arranged at a rear focal position of the first relay lens 26. The central part of the aperture stop 27 is formed with an opening 27a through which the plurality of beams of processing light EL collected by transmitting through the first relay lens 26. The aperture stop 27 blocks the diffracted light DL transmitting through the first relay lens 26 from the spatial light modulation element unit 21.

The plurality of beams of processing light EL passing through the opening 27a of the aperture stop 27 are incident on the second relay lens 28. The second relay lens 28 makes the traveling directions of the plurality of beams of processing light EL transmitting through the second relay lens 28 parallel to one another. The second relay lens 28 is arranged such that a front focal position of the second relay lens 28 is located at the rear focal position of the first relay lens 26.

The plurality of beams of processing light EL transmitting through the second relay lens 28 are incident on the collecting lens 29. The collecting lens 29 collects the plurality of beams of processing light EL incident on the collecting lens 29 toward the galvanometer mirror 31 of the irradiation device 30. The collecting lens 29 may be arranged such that a front focal position of the collecting lens 29 is located at a rear focal position of the second relay lens 28.

The plurality of beams of processing light EL transmitting through the collecting lens 29 are incident on the irradiation device 30 (galvanometer mirror 31). The irradiation device 30 irradiates the workpiece W1 with the plurality of beams of processing light EL incident on the irradiation device 30. As shown in FIG. 1, the irradiation device 30 comprises, in order from the light source 5, the galvanometer mirror 31 and the scanning optical system 35.

The galvanometer mirror 31 changes an exit direction of the plurality of beams of processing light EL by swinging or rotating a reflecting surface to change an angle with respect to an optical path of the processing light EL. The change in the exit direction of the plurality of beams of processing light EL by the galvanometer mirror 31 is converted into a change in an irradiation position of the plurality of beams of processing light EL by the scanning optical system 35. Therefore, the galvanometer mirror 31 can change the irradiation position (collecting position) of the processing light EL on the workpiece W1 by changing the exit direction of the plurality of beams of processing light EL. Thus, the galvanometer mirror 31 can scan the surface of the workpiece W1 with the plurality of beams of processing light EL. In addition, the surface of the workpiece W1 may be scanned with the plurality of beams of processing light EL using a polygon scanner or an acousto-optic element instead of the galvanometer mirror 31.

The processing light EL exited from the galvanometer mirror 31 is incident on the scanning optical system 35. The scanning optical system 35 collects the processing light EL from the galvanometer mirror 31 on the surface of the workpiece W1. In other words, the scanning optical system 35 irradiates the surface of the workpiece W1 with the processing light EL being in a converged state.

The control device 40 is configured using, for example, a CPU (central processing unit) and a memory (not shown). The control device 40 controls operations of the light source 5, the drive circuit 22, the galvanometer mirror 31, and the like, based on control programs stored in the memory.

In the light processing device 1 configured as described above, the processing light EL emitted from the light source 5 is incident on the processing optical system 10. The processing optical system 10 splits the processing light EL incident on the processing optical system 10 into the plurality of beams of processing light (for example, nine beams of processing light arranged three by three lengthwise and breadthwise), and exits the light toward the irradiation device 30. The plurality of beams of processing light EL exited from the processing optical system 10 are irradiated onto the workpiece W1 through the galvanometer mirror 31 and the scanning optical system 35 of the irradiation device 30. At this time, the galvanometer mirror 31 changes the irradiation position (collecting position) of the processing light EL on the workpiece W1 by changing the exit direction of the plurality of beams of processing light EL. Thus, the galvanometer mirror 31 scans the surface of the workpiece W1 with the plurality of beams of processing light EL.

In the processing optical system 10, the plurality of beams of processing light EL exited from the diffractive optical element 11 are incident on the collector lens 12. The plurality of beams of processing light EL transmitting through the collector lens 12 are incident on the plurality of collimator lenses 13. The plurality of beams of processing light EL transmitting through the plurality of collimator lenses 13 are incident on the optical isolator 14. The plurality of beams of processing light EL transmitting through the optical isolator 14 are incident on the plurality of cylindrical expanders 15. The plurality of beams of processing light EL transmitting through the plurality of cylindrical expanders 15 are incident on the cylindrical lens 16. The plurality of beams of processing light EL transmitting through the cylindrical lens 16 are incident on the plurality of spatial light modulation elements 100 of the optical unit 20 (spatial light modulation element unit 21). The cross-sectional shape of the processing light EL incident on each of the spatial light modulation elements 100 becomes an ellipse of which width in the Y direction is smaller than a width in the X direction (see FIG. 3).

In a state where no voltage is applied to each of the electrodes of the plurality of spatial light modulation elements 100, the processing light EL incident on the spatial light modulation element 100 is exited from the spatial light modulation element 100, as a zeroth order diffracted light, and incident on the lens array 23. The plurality of beams of processing light EL (for example, nine beams of processing light EL arranged three by three in the X direction and the Y direction), which split after transmitting through the respective lenses 24 of the lens array 23, are once collected at a focal position (position of a first intermediate image IM1) of the lens array 23 to form a plurality of (nine) discrete collected beams. The plurality of beams of processing light EL collected once at the focal position of the lens array 23 are incident on the first relay lens 26 of the Schlieren optical system 25. The plurality of beams of processing light EL transmitting through the first relay lens 26 are incident on the second relay lens 28 by passing through the opening 27a of the aperture stop 27. The plurality of beams of processing light EL transmitting through the second relay lens 28 are collected at a rear focal position (position of a second intermediate image IM2) of the second relay lens 28 again to form a plurality of (nine) discrete collected beams. The plurality of beams of processing light EL collected at the rear focal position of the second relay lens 28 again are incident on the collecting lens 29. The plurality of beams of processing light EL transmitting through the collecting lens 29 are collected by the galvanometer mirror 31 of the irradiation device 30.

When a voltage is applied to each of the electrodes of the spatial light modulation elements 100, the processing light EL incident on the spatial light modulation element 100 is diffracted to generate a diffracted light of a predetermined order. Furthermore, when a voltage is applied to electrodes of a control group corresponding to some of the lenses 24 of the lens array 23 in the spatial light modulation element 100, some of the plurality of beams of processing light EL incident on the spatial light modulation element 100 are diffracted to generate a diffracted light of a predetermined order. For example, when a voltage is applied to the electrode of the control group corresponding to the central lens 24 of the lens array 23 in the spatial light modulation element 100, the processing light EL in the central part out of the beams of processing light EL, which are the ellipse (sheet shape) in a cross section and are incident on the spatial light modulation element 100 is diffracted with a diffraction efficiency corresponding to the applied voltage, and the diffracted light DL of a predetermined order is exited from the spatial light modulation element 100. At this time, some of the plurality of beams of processing light EL in the central part are exited as a zeroth order diffracted light from the spatial light modulation element 100. When an appropriate voltage with a diffraction efficiency of 100% is applied to the electrode, all of the beams of processing light EL in the central part are diffracted, and the diffracted light DL of a predetermined order is exited from the spatial light modulation element 100 (the zeroth order diffracted light not being exited). In addition, when a voltage is applied to the electrode of the control group corresponding to the central lens 24 of the lens array 23 in the spatial light modulation element 100, and no voltage is applied to the electrodes of the control group corresponding to the lenses 24 on both end sides of the lens array 23, the processing light EL in the other parts (parts on the end sides in the $\pm$ X direction) is exited as a zeroth order diffracted light from the spatial light modulation element 100.

The diffracted light DL exited from the spatial light modulation element 100 transmits through the lens array 23, travels at an angle in the X direction with respect to the optical axis of the processing optical system 10, and is incident on the first relay lens 26 of the Schlieren optical system 25. The diffracted light DL, which travels at an angle with respect to the optical axis of the processing optical system 10 and transmits through the first relay lens 26, is blocked by the aperture stop 27. In other words, the processing light EL is diffracted by the spatial light modulation element 100 and attenuated by the aperture stop 27. Thus, when a voltage is applied to at least some of the electrodes of the spatial light modulation element 100, at least one of the plurality of beams of processing light EL (for example, nine beams of processing light arranged three by three lengthwise and breadthwise) can be selected (when the voltage with the diffraction efficiency of 100% is applied to the electrodes) so as not to be irradiated onto the workpiece W1. In addition, some of the plurality of beams of processing light EL can be irradiated onto the workpiece W1 by changing the intensity continuously or stepwise.

Therefore, the control device 40 controls the drive circuit 22 to change the electrode, to which the voltage is applied, out of the plurality of electrodes provided on the plurality of spatial light modulation elements 100, thereby making it possible to selectively change the processing light to be irradiated onto the workpiece W1 out of the plurality of beams of processing light EL in a short time. Furthermore, the intensity of the processing light irradiated onto the workpiece W1 can also be changed continuously or stepwise. For this reason, according to the light processing device 1 including the optical unit 20 (spatial light modulation element 100), it is possible to change the shape of the processing light irradiated onto the workpiece W1 in a short time within the range in which the voltage can be controlled, and to perform more diverse processing.

A shaping optical system (the cylindrical expander 15 and the cylindrical lens 16) may also be provided to shape the beam cross-sectional shape of the processing light EL from the light source 5 into an elliptical shape. Thus, the spatial light modulation element 100 can exit the diffracted light DL of a predetermined order, which is generated by diffraction of some of the plurality of beams of processing light EL incident on the spatial light modulation element 100 and being the ellipse in the cross-sectional shape, and exit the other processing light EL as a zeroth order diffracted light. Therefore, it is possible to selectively change the processing light to be irradiated onto the workpiece W1 out of the plurality of beams of processing light EL (for example, nine beams of processing light arranged three by three lengthwise and breadthwise), using a relatively small number of spatial light modulation elements 100.

The configuration is such that the zeroth order diffracted light exited from the spatial light modulation element 100 passes through the opening 27a of the aperture stop 27 and the diffracted light of a predetermined order exited from the spatial light modulation element 100 is blocked by the aperture stop 27, but the present invention is not limited thereto. For example, the configuration may be such that the diffracted light of a predetermined order exited from the spatial light modulation element 100 passes through the opening 27a of the aperture stop 27 and the zeroth order diffracted light exited from the spatial light modulation element 100 is blocked by the aperture stop 27. Furthermore, a light-attenuating filter having an opening in a center may be provided instead of the aperture stop 27 such that the amount of diffracted light is significantly reduced by the light-attenuating filter. The aperture stop 27 for blocking the diffracted light and the light-attenuating filter for reducing the amount of diffracted light can also be considered as a light-attenuating part that attenuates the diffracted light.

In the light processing device 1 described above, the Schlieren optical system 25 may not be provided between the lens array 23 and the collecting lens 29. In this case, a light-attenuating part may be provided in the galvanometer mirror 31, on which the plurality of beams of processing light EL are collected by the collecting lens 29, to attenuate the diffracted light of a predetermined order exited from the spatial light modulation element 100, and as such a light-attenuating part, for example, a galvanometer mirror having a reflecting surface of a size of shape that prevents the diffracted light of a predetermined order exited from the spatial light modulation element 100 from being incident.

[Modified Example of Light processing device]

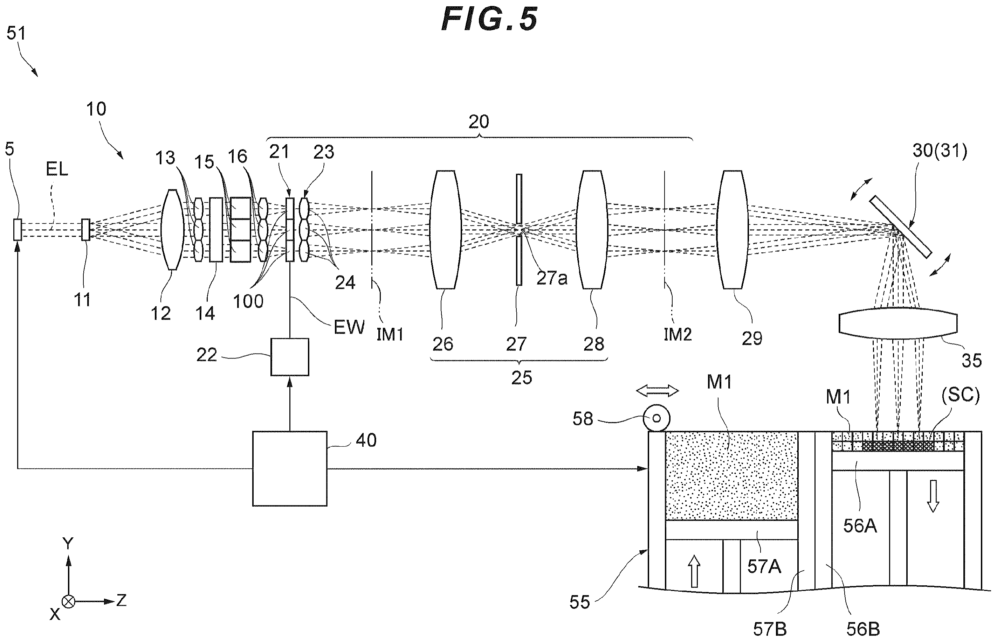

The light processing device including the spatial light modulation element 100 is not limited to the light processing device 1 that performs the removal processing described above, but may also be a light processing device 51 (see FIG. 5) that performs additive processing. The light processing device 51 according to a first modified example comprises, as shown in FIG. 5, a light source 5, a processing optical system 10, an irradiation device 30, a control device 40, and a supply mechanism 55. The light processing device 51 performs additive processing by irradiating a modeling material M1 supplied by the supply mechanism 55 with the processing light EL, thereby forming a three-dimensional model SC. The modeling material M1 is formed in powder form using, for example, a metal material such as titanium or stainless steel, a resin material such as engineering plastic, or a ceramic material.

The light source 5, the processing optical system 10, the irradiation device 30, and the control device 40 have the same configuration as the light source 5, the processing optical system 10, the irradiation device 30, and the control device 40 of the light processing device 1 described above, and therefore will not be described in detail with the same reference numerals. The light source 5 may be a laser light source that emits pulsed light as the processing light EL. In this case, the pulsed light may have a pulse width longer than that of a femtosecond laser. In addition, the wavelength of the processing light EL may be in the wavelength range (for example, 1064 nm) of infrared light.

The supply mechanism 55 comprises a build piston 56A and a build cylinder 56B, a feed piston 57A and a feed cylinder 57B, and a leveling roller 58. The build piston 56A and the build cylinder 56B are arranged below the scanning optical system 35. The build piston 56A is attached inside the build cylinder 56B to be able to reciprocate in the up and down direction. The feed piston 57A and the feed cylinder 57B are arranged side by side with the build piston 56A and the build cylinder 56B. The feed piston 57A is arranged inside the feed cylinder 57B to be able to reciprocate in the up and down direction. The modeling material M1 is stored above the feed piston 57A in the feed cylinder 57B. The leveling roller 58 is arranged to be able to reciprocate in a substantially horizontal direction between an upper edge of the feed cylinder 57B and an upper edge of the build cylinder 56B. The leveling roller 58 rolls from the upper edge of the feed cylinder 57B toward the upper edge of the build cylinder 56B, thereby pushing and supplying the modeling material M1, which is stored above the feed piston 57A, above the build piston 56A. In addition, the control device 40 controls the operation of the supply mechanism 55 in addition to the light source 5, the drive circuit 22, and the galvanometer mirror 31. The supply mechanism 55 may also include a squeegee instead of the leveling roller 58.

In the light processing device 51 according to the first modified example, the supply mechanism 55 repeatedly supplies a layer of the modeling material M1 having a predetermined thickness above the build piston 56A inside the build cylinder 56B each time the processing light EL is irradiated. At this time, the build piston 56A moves downward by a distance equal to the predetermined thickness, and the feed piston 57A moves upward together with the modeling material M1 stored above the feed piston 57A. Then, the leveling roller 58 pushes the modeling material M1, which protrudes from the upper edge of the feed cylinder 57B, above the build piston 56A. Thus, the layer of the modeling material M1 having the predetermined thickness is supplied above the build piston 56A inside the build cylinder 56B. The predetermined thickness is a thickness of the layer of the modeling material M1 that can form a part of the three-dimensional model SC by irradiation with the processing light EL.

As in the case of the light processing device 1 described above, the processing light EL emitted from the light source 5 is incident on the processing optical system 10. The processing optical system 10 splits the processing light EL incident on the processing optical system 10 into a plurality of beams of processing light (for example, nine beams of processing light arranged three by three lengthwise and breadthwise), and exits the light toward the irradiation device 30. The plurality of beams of processing light EL exited from the processing optical system 10 are irradiated, through the galvanometer mirror 31 and the scanning optical system 35 of the irradiation device 30, onto an uppermost layer of the modeling material M1 supplied above the build piston 56A inside the build cylinder 56B. At this time, the galvanometer mirror 31 changes the irradiation position (collecting position) of the processing light EL on the modeling material M1 by changing the exit direction of the plurality of beams of processing light EL. Thus, the galvanometer mirror 31 scans the uppermost layer of the modeling material M1 with the plurality of beams of processing light EL.

As described above, the light source 5, the processing optical system 10, the irradiation device 30, and the control device 40 have the same configuration as the light source 5, the processing optical system 10, the irradiation device 30, and the control device 40 of the light processing device 1 described above. Therefore, similarly to the light processing device 1 described above, the control device 40 controls the drive circuit 22 to change the electrode, to which the voltage is applied, out of the plurality of electrodes provided on the plurality of spatial light modulation elements 100, thereby making it possible to selectively change the processing light to be irradiated onto the modeling material M1 out of the plurality of beams of processing light EL (for example, nine beams of processing light arranged three by three lengthwise and breadthwise) in a short time. Furthermore, the intensity of the processing light irradiated onto the modeling material M1 can also be changed continuously or stepwise. For this reason, the same effects as those of the light processing device 1 described above can be obtained.

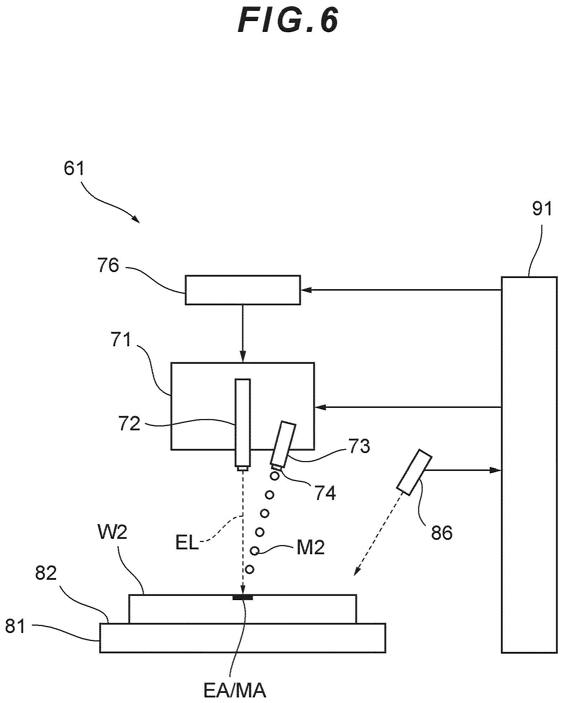

Furthermore, the light processing device including the spatial light modulation element 100 may be a light processing device 61 (see FIG. 6) capable of forming a model using laser metal deposition (LMD) as additive processing. The light processing device 61 according to a second modified example comprises, as shown in FIG. 6, a modeling head 71, a head drive system 76, a stage 81, a measuring device 86, and a control device 91. The light processing device 61 irradiates a modeling material M2, which is supplied from a supply nozzle 73 of the modeling head 71, with the processing light EL and performs additive processing on the workpiece W2, thereby forming a three-dimensional model.

The light processing device 61 forms a three-dimensional model on the workpiece W2, which serves as a base (that is, a base material) for forming the model. When the workpiece W2 is the stage 81, the light processing device 61 can form a three-dimensional model on the stage 81. The modeling material M2 is a material that can be melted by irradiation with processing light EL of a predetermined intensity or more. The modeling material M2 is formed into a powder or granular form using, for example, at least one of a metal material and a resin material.

The modeling head 71 comprises an irradiation unit 72 and a supply nozzle 73. The irradiation unit 72 includes a processing optical system (not shown) and an irradiation device (not shown). The processing optical system and the irradiation device of the irradiation unit 72 have the same configuration as the processing optical system 10 and the irradiation device 30 of the light processing device 1 described above. In other words, the irradiation unit 72 is provided with an optical unit and a spatial light modulation element similar to the optical unit 20 and the spatial light modulation element 100 which are described above. The irradiation unit 72 is optically connected to a light source (not shown) via an optical transmission member (not shown) such as an optical fiber. The light source emits the processing light EL, for example, laser light. The wavelength range of the processing light EL may be a wavelength range of visible light, a wavelength range of infrared light, or a wavelength range of ultraviolet light. The irradiation unit 72 splits the processing light EL transmitted from the light source through the optical transmission member into a plurality of beams of processing light, and irradiates the light downward.

The stage 81 is arranged below the irradiation unit 72. When the workpiece W2 is held on the stage 81, the irradiation unit 72 can irradiate the workpiece W2 with (plurality of) processing light EL. Specifically, the irradiation unit 72 irradiates an irradiation area EA of a predetermined shape that is set on the workpiece W2 as an area to be irradiated (collected) with the processing light, with the processing light EL.

The supply nozzle 73 supplies the modeling material M2 from a supply port 74 formed at a tip of the supply nozzle 73. Specifically, the supply nozzle 73 sprays, jets out, or exits the modeling material M2 from the supply port 74 formed at the tip of the supply nozzle 73. The supply nozzle 73 is physically connected to a material supply device (not shown), which is a supply source of the modeling material M2, through a material conveying member (not shown) such as a pipe. The supply nozzle 73 supplies the modeling material M2 conveyed from the material supply device through the conveying member downward.

The stage 81 is arranged below the supply nozzle 73. When the workpiece W2 is held on the stage 81, the supply nozzle 73 can irradiate the workpiece W2 with the modeling material M2. In addition, the supply nozzle 73 is aligned in position with the irradiation unit 72 to supply the modeling material M2 toward the irradiation area EA onto which the irradiation unit 72 irradiates the processing light EL. In other words, the supply nozzle 73 and the irradiation unit 72 are aligned in position with each other such that a supply area MA, which is set on the workpiece W2 as an area onto which the supply nozzle 73 supplies the modeling material M2, coincides (or at least partially overlaps) with the irradiation area EA.

The head drive system 76 is configured using a motor, for example. The head drive system 76 moves the modeling head 71 in a three-dimensional direction. The head drive system 76 can change a position relation between the workpiece W2 and the irradiation area EA by moving the modeling head 71. Furthermore, the head drive system 76 can change a position relation between the workpiece W2 and the supply area MA by moving the modeling head 71.

The stage 81 detachably holds the workpiece W2 on an upper surface 82 that can face the modeling head 71. The measuring device 86 measures a state of an object to be measured on the stage 81. The object to be measured may include the workpiece W2 and a test mark (not shown) formed on the stage 81. The measuring device 86 measures, as an example of the state of the object to be measured, a position of the object to be measured on the stage 81. For example, the measuring device 86 may measure an absolute position of the test mark on the stage 81. The measuring device 86 may measure a relative position of the test mark with respect to the workpiece W2 on the stage 81.

The control device 91 is configured using a CPU (central processing unit) and a memory (not shown), for example. The control device 91 controls operations of the irradiation unit 72, the supply nozzle 73, the head drive system 76, and the measuring device 86 based on control programs stored in the memory.

In the light processing device 61 according to the second modified example, as described above, the processing optical system and the irradiation device of the irradiation unit 72 have the same configuration as the processing optical system 10 and the irradiation device 30 of the light processing device 1 described above. Therefore, similarly to the light processing device 1 described above, the control device 91 controls a voltage generator (not shown) to change the electrode, to which the voltage is applied, out of the plurality of electrodes provided on the plurality of spatial light modulation elements, thereby making it possible to selectively change the processing light to be irradiated onto the modeling material M2 out of the plurality of beams of processing light EL (for example, nine beams of processing light arranged three by three lengthwise and breadthwise) in a short time. Furthermore, the intensity of the processing light irradiated onto the modeling material M2 can also be changed continuously or stepwise. For this reason, the same effects as those of the light processing device 1 described above can be obtained.

[First Embodiment]

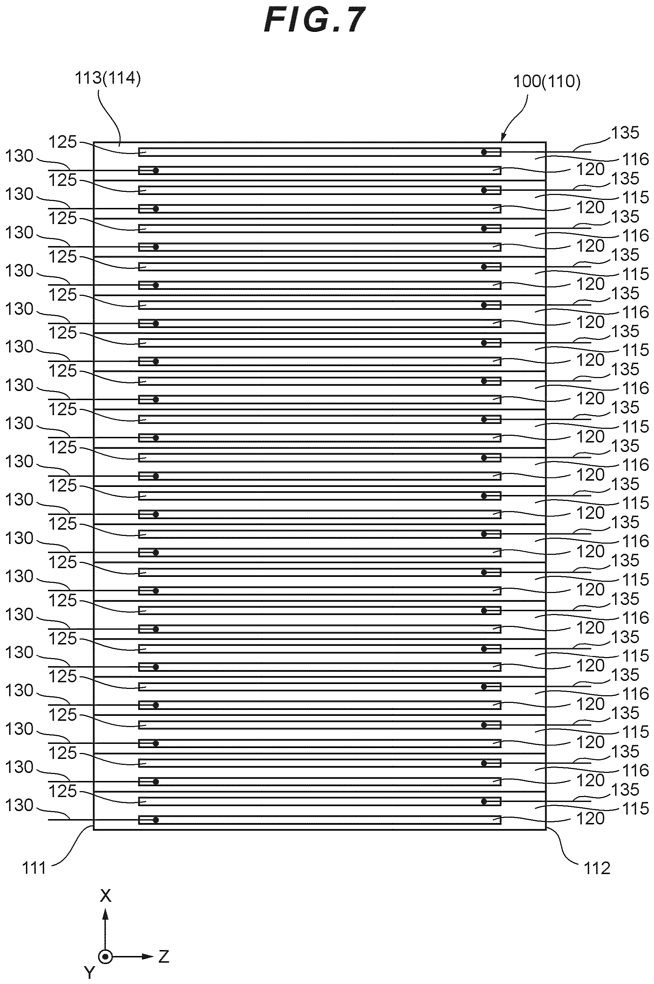

Next, a spatial light modulation element 100 according to a first embodiment will be described. The spatial light modulation element 100 according to the first embodiment is a line-type (also referred to as a linear type) electro-optic spatial light modulation element, and has a configuration advantageous for Raman-Nath diffraction. As shown in FIGS. 7 to 9, the spatial light modulation element 100 according to the first embodiment comprises an optical member 110, a plurality of positive electrodes 120, a plurality of negative electrodes 125, a plurality of positive wires 130, and a plurality of negative wires 135. The spatial light modulation element 100 modulates a sheet-shaped processing light EL of which cross section is shaped into a flattened ellipse, and exits the light. In the first embodiment, directions indicated by arrows in FIG. 7 may be referred to as an X direction, a Y direction, and a Z direction, respectively. The X direction, the Y direction, and the Z direction are directions that are orthogonal to one another.

The optical member 110 is formed into a flat rectangular parallelepiped shape using a ferroelectric material having light transmittance. The ferroelectric is a type of dielectric, and refers to an optical crystal in which electric dipoles are aligned even in the absence of an external electric field and directions of the dipoles can be changed by an electric field. Examples of the ferroelectric material having light transmittance include lithium niobate, lithium tantalate, MgO:LN (MgO doped Lithium Niobate), and MgO:SLT (MgO doped Stoichiometric Lithium Tantalate). An incident plane 111 is formed at one end (in the - Z direction) of the optical member 110. The processing light EL having a sheet shape (ellipse in cross section) traveling in the Z direction is incident on the incident plane 111 as incident light. In addition, the Z direction may be referred to as a first axis direction, and the incident plane 111 may intersect with a first axis. An exit plane 112 is formed at an end (in the + Z direction) of the optical member 110 opposite to the incident plane 111. The light incident on the inside of the optical member 110 from the incident plane 111 is exited from the exit plane 112.

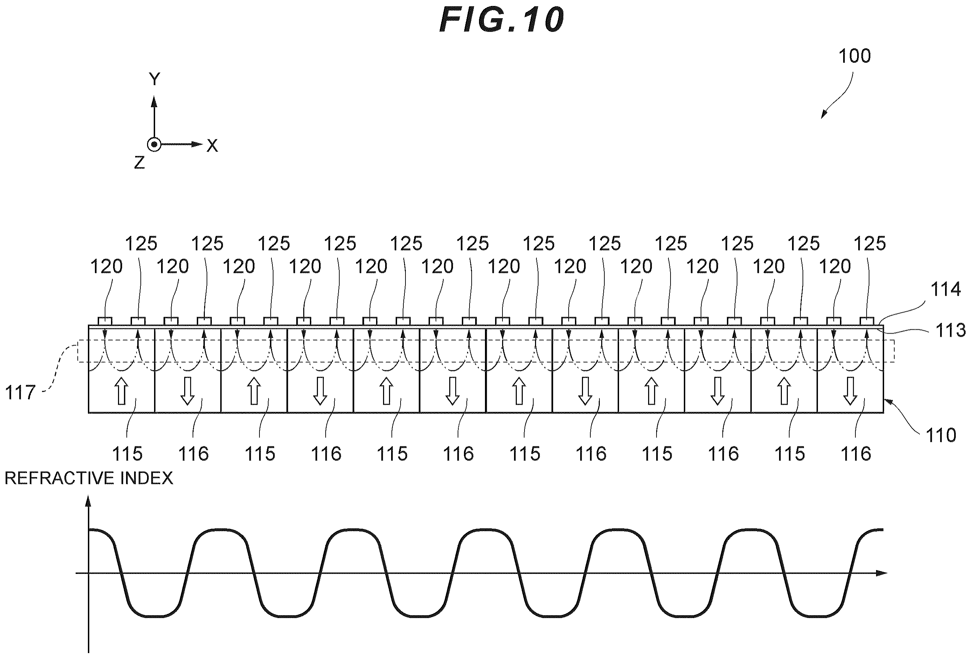

An arrangement surface 113, on which the positive and negative electrodes 120 and 125 are arranged, is formed on a side surface in the + Y direction of the optical member 110. A plurality of pairs of positive and negative electrodes 120 and 125 are arranged in the X direction on the arrangement surface 113. The positive and negative electrodes 120 and 125 are formed using a metal material containing, for example, gold (Au). A buffer layer 114 (see FIG. 10) is formed between the arrangement surface 113 and the plurality of pairs of positive and negative electrodes 120 and 125. The buffer layer 114 is formed using, for example, silicon dioxide ($SiO_2$). The X direction may be referred to as a second axis direction, and the Y direction may be referred to as a third axis direction. The arrangement surface 113 may also intersect with a third axis.

The optical member 110 has a periodic polarization reversal structure. The optical member 110 is provided with a plurality of first polarization parts 115 extending in the Z direction and a plurality of second polarization parts 116 adjacent to the first polarization parts 115 and extending in the Z direction, which are alternately arranged side by side in the X direction. For example, when three lenses 24 of the lens array 23 of the light processing device are arranged side by side in the X direction, the optical member 110 may include at least 18 first and second polarization parts 115 and 116. When five lenses 24 of the lens array 23 of the light processing device are arranged side by side in the X direction, the optical member 110 may include at least 30 first and second polarization parts 115 and 116. The second polarization parts 116 are polarized in a different direction (specifically, in an opposite direction to) from the first polarization parts 115. To provide the optical member 110 with the periodic polarization reversal structure, a polarization direction of a portion corresponding to the second polarization part 116 is reversed by 180° relative to the optical member that is formed in the rectangular parallelepiped shape and has a uniform polarization (dielectric polarization). For example, in a case of using a known method called an "electric field application method", an electrode is attached to the portion corresponding to the second polarization part 116, and a voltage having a certain level or higher (also called a polarization reversal voltage or a coercive field) is applied, whereby the polarization direction of the second polarization part 116 is reversed. In addition, a polarization direction of the first polarization part 115 in addition to the second polarization part 116 may also be reversed.

The pair of positive and negative electrodes 120 and 125 is provided in each portion of the arrangement surface 113 where the first polarization part 115 is located. In the portion of the arrangement surface 113 where the first polarization part 115 is located, the positive and negative electrodes 120 and 125 are formed extending parallel to each other in the Z direction from one end side to the other end side of the first polarization part 115. In addition, the negative electrode 125 is arranged adjacent to the positive electrode 120 in the + X direction. The positive and negative electrodes 120 and 125 of the first polarization part 115 may also be referred to as first and second electrodes, respectively.

Furthermore, the pair of positive and negative electrodes 120 and 125 is provided in each portion of the arrangement surface 113 where the second polarization part 116 is located. In the portion of the arrangement surface 113 where the second polarization part 116 is located, the positive and negative electrodes 120 and 125 are formed extending parallel to each other in the Z direction from one end side to the other end side of the second polarization part 116. In addition, the negative electrode 125 is arranged adjacent to the positive electrode 120 in the + X direction. The positive and negative electrodes 120 and 125 of the second polarization part 116 may also be referred to as third and fourth electrodes, respectively.

The plurality of positive electrodes 120 are electrically connected to the plurality of positive wires 130, respectively. The plurality of positive wires 130 are electrically connected to the drive circuit 22 described above. The plurality of positive wires 130 apply the voltages, which are supplied from the drive circuit 22, to the plurality of positive electrodes 120, respectively. When the voltage is applied to the positive electrode 120 through the positive wire 130, a potential difference can be created between the adjacent positive and negative electrodes 120 and 125. The plurality of negative electrodes 125 are electrically connected to a plurality of ground wires 135, respectively. The plurality of ground wires 135 are electrically connected to the drive circuit 22. The plurality of positive wires 130 and the plurality of ground wires 135 constitute the wiring EW described above.

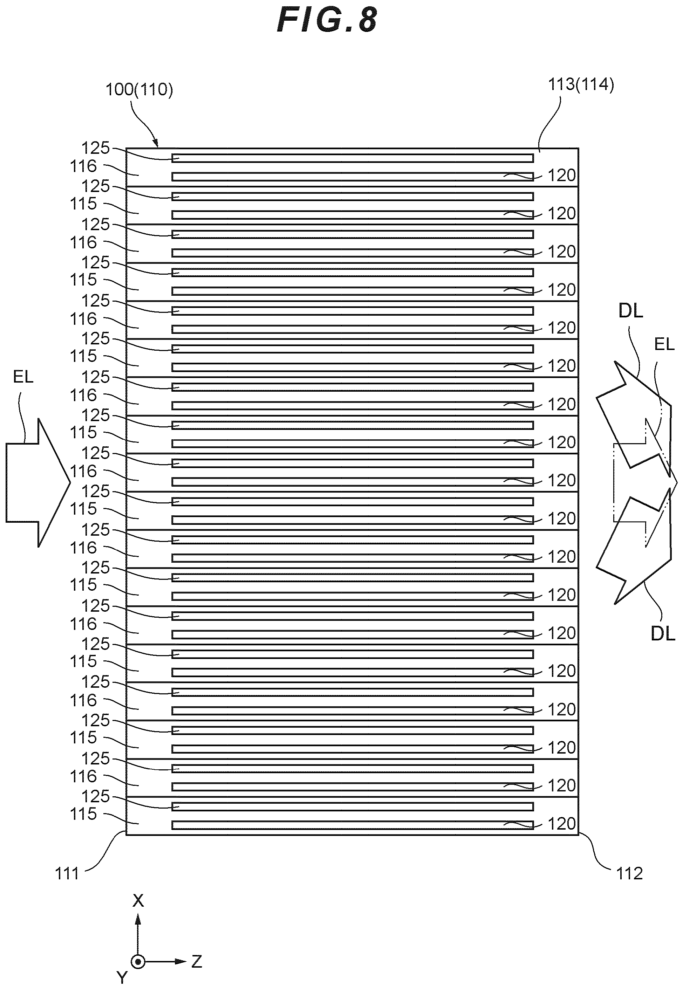

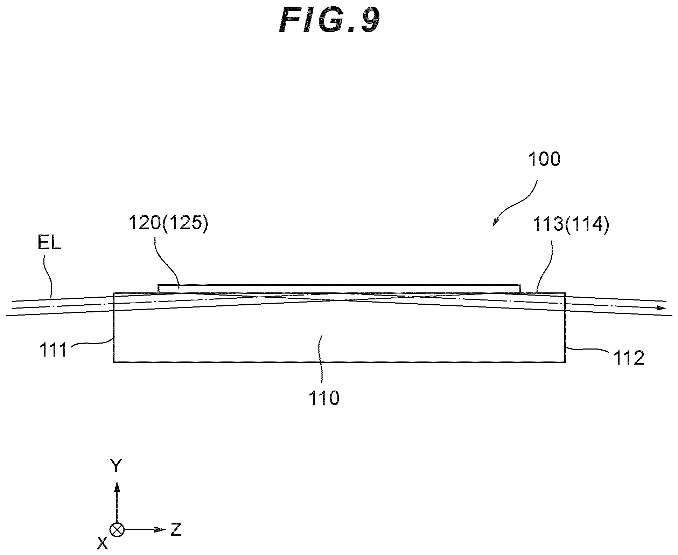

In the spatial light modulation element 100 configured as described above, the processing light EL having a sheet shape (ellipse in cross section) is incident as incident light on the incident plane 111 of the optical member 110 as shown in FIGS. 8 and 9. When no voltage is applied to the positive and negative electrodes 120 and 125, the sheet-shaped processing light EL incident on the inside of the optical member 110 from the incident plane 111 is totally reflected at positions of the positive and negative electrodes 120 and 125 on the arrangement surface 113, and is exited from the exit plane 112 as zeroth order diffracted light.

As shown in FIG. 10, when a voltage (a voltage lower than the polarization reversal voltage described above) is applied to the positive electrode 120 through the positive wire 130, a potential difference is generated between the adjacent positive and negative electrodes 120 and 125, and an electric field is generated inside the optical member 110, directed from the positive electrode 120 to the negative electrode 125. As described above, the optical member 110 has the periodic polarization reversal structure. In FIG. 10, the polarization directions in the first polarization part 115 and the second polarization part 116 are schematically indicated by thick arrows. A graph shown in FIG. 10 also shows changes in refractive index in the first polarization part 115 and the second polarization part 116.

When a voltage is applied to the positive electrode 120 in the portion of the arrangement surface 113 where the first polarization part 115 is located, an electric field is generated from the positive electrode 120 toward the first polarization part 115, and the electric field gradually changes in direction and moves toward the negative electrode 125. The refractive index in the first polarization part 115 changes due to the electro-optic effect as the electric field moves from the positive electrode 120 toward the negative electrode 125. The refractive index of a region in the first polarization part 115 near the arrangement surface 113 changes in the X direction, for example, such that the refractive index is higher at a position closer to the positive electrode 120 and is lower at a position closer to the negative electrode 125.

When a voltage is applied to the positive electrode 120 in the portion of the arrangement surface 113 where the second polarization part 116 is located, an electric field is generated from the positive electrode 120 toward the second polarization part 116, and the electric field gradually changes in direction and moves toward the negative electrode 125. The refractive index in the second polarization part 116 changes due to the electro-optic effect as the electric field moves from the positive electrode 120 toward the negative electrode 125. The second polarization part 116 is polarized in a different direction (specifically, in an opposite direction to) from the first polarization part 115. Therefore, the refractive index of a region in the second polarization part 116 near the arrangement surface 113 changes in the X direction, for example, such that the refractive index is lower at the position closer to the positive electrode 120 and is higher at the position closer to the negative electrode 125. A diffraction grating 117 having a pitch direction in the X direction is generated in a region where the refractive index changes inside the optical member 110 (the first polarization part 115 and the second polarization part 116).

In a state where the voltage is applied to the positive electrode 120, the sheet-shaped processing light EL incident on the inside of the optical member 110 from the incident plane 111 is diffracted by Raman-Nath diffraction in the region where the diffraction grating 117 is generated (that is, the region where the refractive index changes). The diffracted light DL (for example, ± 1st order diffracted light) generated by the Raman-Nath diffraction is totally reflected at the positions of the positive and negative electrodes 120 and 125 on the arrangement surface 113, and is exited from the exit plane 112. In this way, the spatial light modulation element 100 modulates the processing light EL incident on the incident plane 111 of the optical member 110 due to the potential difference between the adjacent positive and negative electrodes 120 and 125, and exits the diffracted light DL from the exit plane 112.

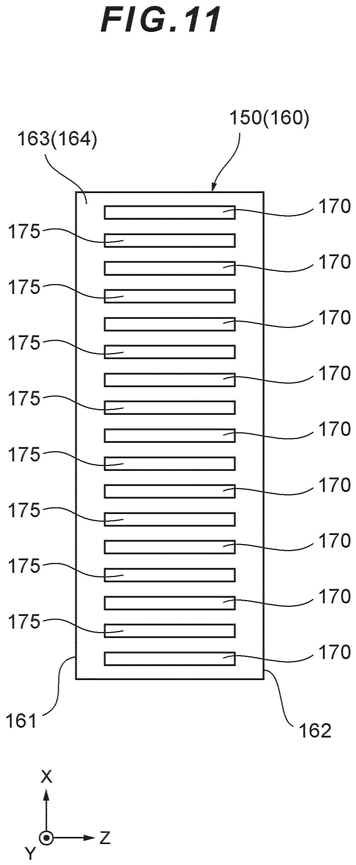

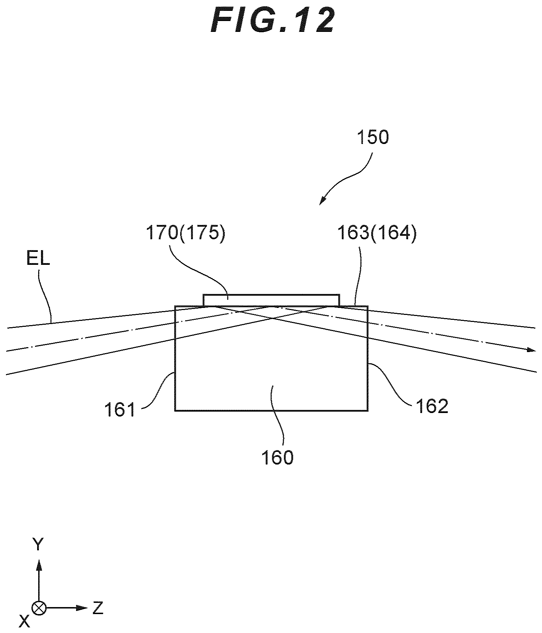

A conventional spatial light modulation element will be described herein. A conventional spatial light modulation element 150 illustrated in FIGS. 11 to 13 is a line-type electro-optic spatial light modulation element using total internal reflection (TIR). The spatial light modulation element using the total internal reflection (TIR) is disclosed in U.S. Patent No. 6,169,565, for example. The conventional spatial light modulation element 150 comprises an optical member 160, a plurality of positive electrodes 170, and a plurality of negative electrodes 175.

The optical member 160 is formed into a flat rectangular parallelepiped shape using a ferroelectric material having light transmittance. The optical member 160 is formed with an incident plane 161, an exit plane 162, and an arrangement surface 163. The processing light EL having a sheet shape (ellipse in cross section) is incident on the incident plane 161 as incident light. The light incident on the inside of the optical member 160 from the incident plane 161 is exited from the exit plane 162. A plurality of positive and negative electrodes 170 and 175 are arranged on the arrangement surface 163. The positive and negative electrodes 170 and 175 are formed using a metal material containing, for example, gold (Au). A buffer layer 164 is formed between the arrangement surface 163 and the plurality of pairs of positive and negative electrodes 170 and 175. The buffer layer 164 is formed using, for example, silicon dioxide (SiO₂). The positive electrode 170 is electrically connected to a positive wire (not shown). The negative electrode 175 is electrically connected to a ground wire (not shown).

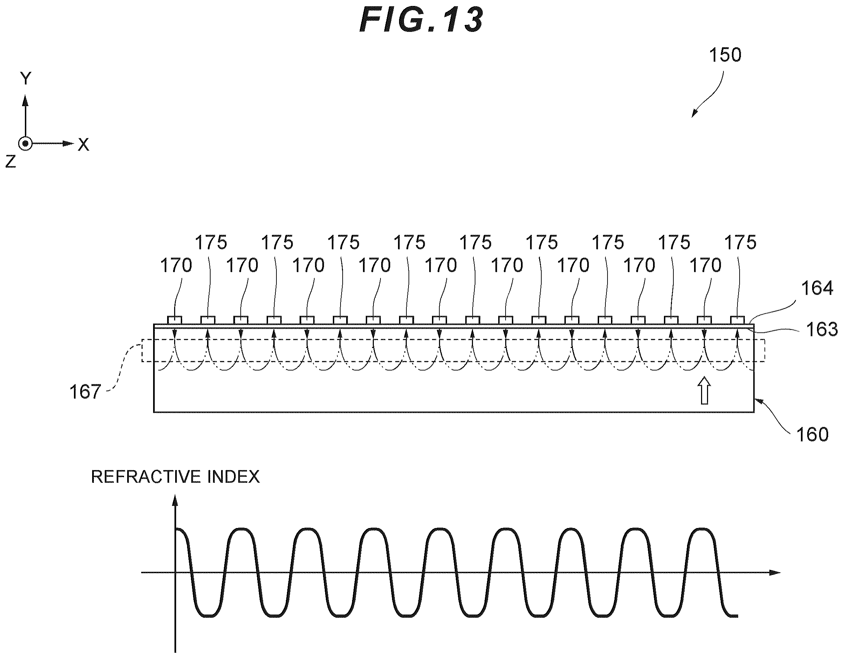

When a voltage is applied to the positive electrode 170, an electric field is generated from the positive electrode 170 toward the optical member 160, and the electric field gradually changes in direction and moves toward the negative electrode 175. The refractive index in the optical member 160 changes due to the electro-optic effect as the electric field moves from the positive electrode 170 toward the negative electrode 175. A diffraction grating 167 is generated in a region where the refractive index changes inside the optical member 160. In the conventional spatial light modulation element 150, for example, when the positive and negative electrodes 170 and 175 made of gold (Au) are provided on the buffer layer 164 having a layer thickness of about 1 μm, a transmittance depth of the electric field into the optical member 160 can be maximized by setting the distance between the positive and negative electrodes 170 and 175 to approximately 20 μm. FIG. 13 schematically shows the conventional spatial light modulation element 150 when the distance between the positive and negative electrodes 170 and 175 is 20 μm. In FIG. 13, the direction of polarization (dielectric polarization) in the optical member 160 is schematically indicated by a thick arrow. A graph shown in FIG. 13 also shows changes in refractive index in the optical member 160.

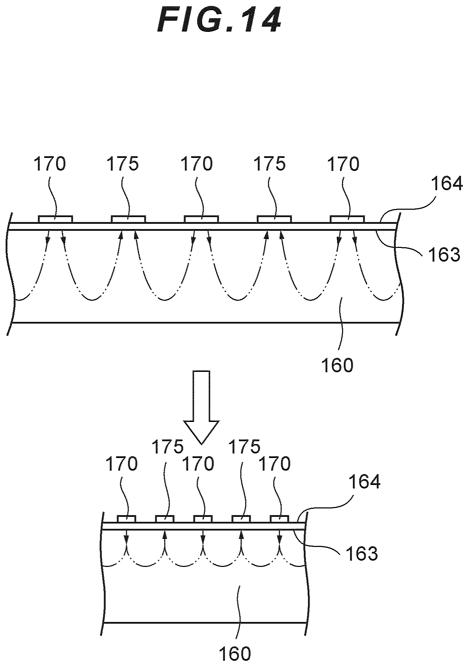

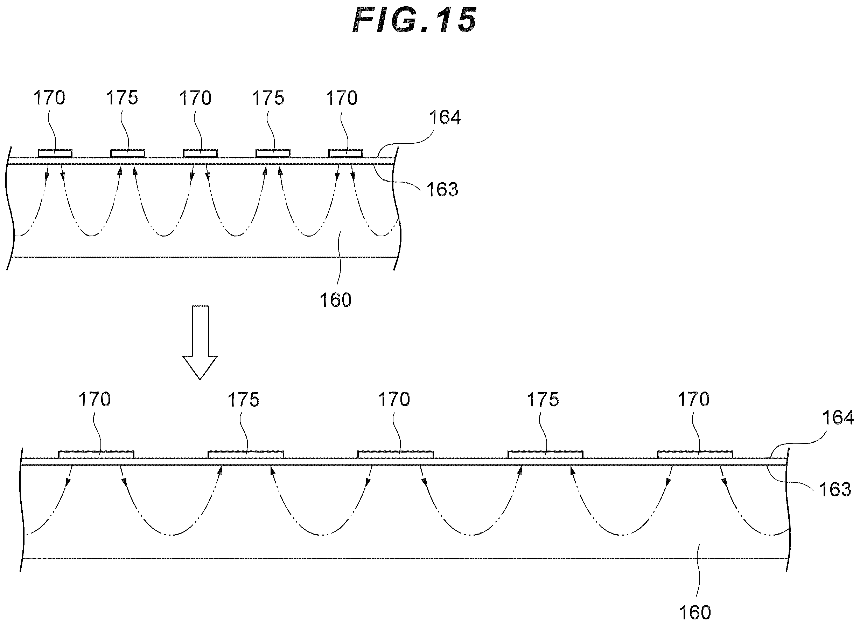

As shown in FIG. 14, when the distance between the positive and negative electrodes 170 and 175 is made narrower than 20 μm, the transmittance depth of the electric field becomes shallower. On the other hand, as shown in FIG. 15, when the distance between the positive and negative electrodes 170 and 175 is made wider than 20 μm, the transmittance depth of the electric field does not change significantly. However, despite a uniform electric field is required on the surfaces of the positive and negative electrodes 170 and 175, the electric field is concentrated at edges of the positive and negative electrodes 170 and 175, and thus the electric field is reduced in the central parts of the positive and negative electrodes 170 and 175, whereby a desired change in refractive index cannot be obtained.

Here, a wavelength of the incident light (processing light) is defined as λ, a period (grating pitch) of the diffraction grating is defined as A, a thickness (interaction length) of the diffraction grating is defined as L, and a refractive index of a crystal (optical member) at the wavelength λ is defined as n. A tendency diffraction caused by the interaction between the incident light and the diffraction grating is expressed as a Q parameter by the following Expression (1).

[Expression 1]

$$Q = \frac{2\pi\lambda L}{nA^2} \quad \cdots (1)$$

In Expression (1), it is known that diffraction of light under a condition of Q > 10 is Bragg diffraction, and diffraction of light under a condition of Q < 1 is Raman-Nath diffraction. In the conventional spatial light modulation element 150, when the distance between the positive and negative electrodes 170 and 175 is 20 μm, the period A of the diffraction grating 167 is 40 μm. Here, the wavelength λ of the incident light (processing light) is 1 μm, and the refractive index n of the crystal (optical member 160) at the wavelength λ (λ = 1 μm) is 2.2. In this case, the thickness (interaction length) L of the diffraction grating 167 should be less than 0.56 mm from Expression (1) to generate a diffraction grating of a Raman-Nath diffraction type in the conventional spatial light modulation element 150. As a result, it can be seen that the thickness of the diffraction grating 167 can only be made approximately 0.5 mm.

In contrast, the spatial light modulation element 100 according to the first embodiment has the periodic polarization reversal structure, and the way of the change in refractive index due to the potential difference between the positive and negative electrodes 120 and 125 is opposite for the first polarization part 115 and the second polarization part 116. For this reason, in the spatial light modulation element 100 according to the first embodiment, when the distance between the positive and negative electrodes 120 and 125 is 20 μm, the period A of the diffraction grating 117 is 80 μm. In other words, the period of the diffraction grating 117 in the spatial light modulation element 100 according to the first embodiment is twice the period of the diffraction grating 167 in the conventional spatial light modulation element 150. Furthermore, a periodic polarization reversal structure with a period of 80 μm and a duty ratio of 1:1 can be easily fabricated due to a relatively long period. Here, the wavelength λ of the incident light (processing light) is 1 μm, and the refractive index n of the crystal (optical member 110) at the wavelength λ (λ = 1 μm) is 2.2. In this case, the thickness (interaction length) L of the diffraction grating 117 should be less than 2.24 mm from Expression (1) to generate a diffraction grating of a Raman-Nath diffraction type in the spatial light modulation element 100 according to the first embodiment. As a result, the thickness of the diffraction grating 117 capable of being generated in the spatial light modulation element 100 according to the first embodiment is approximately 2.2 mm, which is approximately four times the thickness of the diffraction grating 167 capable of being generated in the conventional spatial light modulation element 150.

Furthermore, diffraction efficiency $\eta_q$ of Raman-Nath diffraction is expressed by the following Expression (2).

[Expression 2]

$$\eta_q = \left\{ J_q(2\kappa L) \right\}^2 \quad \cdots (2)$$

In Expression (2), $J_q(2\kappa L)$ represents the Bessel function ($q = 0, \pm 1, \pm 2, \pm 3, ...$) of the thickness (interaction length) $L$ of the diffraction grating. In addition, $\kappa$ is expressed by the following Expression (3).

[Expression 3]

$$\kappa = \frac{\pi \Delta n_e}{\lambda} \quad \cdots (3)$$

In Expression (3), $\Delta n_e$ ne is expressed by the following Expression (4).

[Expression 4]

$$\Delta n_e = \frac{-2 n_e^3 r_{33} V}{\pi c g} \quad \cdots (4)$$

In Expression (4), $n_e$ represents the refractive index of the crystal (optical member) at the wavelength $\lambda$. Here, $r_{33}$ represents the Pockels constant. Here, g represents an electrode spacing distance. Here, c represents a conversion factor of the transmittance depth of the electric field. Here, V represents the voltage applied to the electrode.

As can be seen from Expression (2), the diffraction efficiency is proportional to the square of the Bessel function of the thickness (interaction length) $L$ of the diffraction grating. Therefore, when the spatial light modulation element 100 according to the first embodiment is used, desired diffraction efficiency can be obtained with a voltage that is approximately 1/4 of that required when the conventional spatial light modulation element 150 is used. Furthermore, since the desired diffraction efficiency can be obtained with a low voltage, the burden on the drive circuit can be reduced and the processing light EL can be modulated at high speed. In addition, the voltage required to obtain the desired diffraction efficiency is about 80 V for the conventional spatial light modulation element 150, whereas it is about 20 V, which is one-fourth of that required for the spatial light modulation element 100 according to the first embodiment. In this way, the polarization reversal structure, which is easily fabricated with a long period, is added to the optical member 110 formed using the ferroelectric material, whereby the drive voltage required to obtain the desired diffraction efficiency can be lowered, and the processing light EL can be modulated at high speed.

For example, as disclosed in Japanese Patent No. 5058935, a spatial light modulation element is also known in which electrodes are provided on both surfaces of an optical member. In such a spatial light modulation element, electrodes are provided on both surfaces of a thin optical member, and a voltage is applied to each of the electrodes, whereby an electric field can be transmitted through the entire optical member in a thickness direction. Thus, compared to the conventional spatial light modulation element 150 in which the electrode is provided on one surface of the optical member, there is no need to consider the transmittance depth of the electric field, and the intensity of the electric field can be increased by making the optical member thinner even in a Raman-Nath type diffraction grating with a short interaction length L. Therefore, the drive voltage required to obtain the desired diffraction efficiency can be lowered, and the processing light EL can be modulated at high speed.

However, when the spatial light modulation element with the electrodes provided on the both surfaces of the optical member is applied to a light processing device using high-powered laser light, the density of optical power increases in the thin optical member, and thus it is difficult to use a material with low optical power resistance. Furthermore, it is necessary to make the optical member thinner, provide the electrodes on both surfaces of the optical member, and perform bonding of a reinforcing member accompanying the thinning of the optical member, which makes the fabrication of the spatial light modulation element. In contrast, when the spatial light modulation element 100 according to the first embodiment is used, since the positive and negative electrodes 120 and 125 are provided on only one surface (arrangement surface 113) of the optical member 110, the optical member 110 can be made thicker, and even when high-powered laser light is used as the processing light EL, an increase in the density of the optical power within the optical member 110 can be prevented. Since the positive and negative electrodes 120 and 125 are provided on only one surface of the optical member 110, it is not necessary to make the optical member 110 thinner, provide the electrodes on both surfaces of the optical member 110, and perform bonding of a reinforcing member accompanying the thinning of the optical member 110, and the spatial light modulation element can be easily fabricated.

Furthermore, as disclosed in the document "Masahide Okazaki, and Toshiaki Suhara, "High-performance 1024-pixel EO spatial light modulator using cascaded periodically-poled Raman-Nath gratings," IEEE/OSA Journal of Lightwave Technology, vol. 33, no. 24, pp. 5195-5200, Nov. 2015.", in order to independently modulate some of the incident light, taking into account a divergence angle of the light source, it is necessary to change the refractive index of the diffraction grating by three or more periods, that is, it is necessary to collectively control at least six pairs of positive and negative electrodes in the first embodiment. In the spatial light modulation element 100 according to the first embodiment, the plurality of positive electrodes 120 are electrically connected to the drive circuit 22 individually through the plurality of positive wires 130. The plurality of negative electrodes 125 are electrically connected to the drive circuit 22 individually through the plurality of ground wires 135. The drive circuit 22 independently controls the voltage for each control group including at least six pairs of positive and negative electrodes 120 and 125, whereby it is possible to independently modulate some of the incident light (processing light EL).

For example, when three lenses 24 of the lens array 23 of the light processing device are arranged side by side in the X direction, a voltage is applied to the positive electrodes 120 of first to sixth pairs of positive and negative electrodes 120 and 125 counting from the bottom of the paper in FIG. 7, whereby the 1/3 light of the sheet-shaped processing light EL on the end side in the -X direction may be independently modulated, and the diffracted light DL may be exited from the exit plane 112. A voltage is applied to the positive electrode 120 of 7th to 12th pairs of positive and negative electrodes 120 and 125 counting from the bottom of the paper in FIG. 7, whereby the 1/3 light of the sheet-shaped processing light EL on the central side may be independently modulated, and the diffracted light DL may be exited from the exit plane 112. A voltage is applied to the positive electrode 120 of 13th to 18th pairs of positive and negative electrodes 120 and 125 counting from the bottom of the paper in FIG. 7, whereby the 1/3 light of the sheet-shaped processing light EL on the end side in the + X direction may be independently modulated, and the diffracted light DL may be exited from the exit plane 112.

[Characteristic Configuration of First Embodiment]

The spatial light modulation element 100 according to the first embodiment comprises the optical member 110 on which the processing light EL traveling in the Z direction (along the first axis) is incident as the incident light and which is formed using the ferroelectric material having light transmittance, the positive and negative electrodes 120 and 125 that are arranged on the arrangement surface 113 of the optical member 110 in the X direction (along the second axis), and the wiring (the positive wire 130 and the ground wire 135) through which the voltage is applied to the positive electrode 120 to create the potential difference between the positive and negative electrodes 120 and 125. In other words, the spatial light modulation element 100 according to the first embodiment comprises the optical member 110 and the positive and negative electrodes 120 and 125, and when the potential difference is generated between the positive and negative electrodes 120 and 125, the refraction index within the optical member 110 changes in the X direction.

Thus, it is possible to modulate the processing light EL (incident light) at high speed by modulating the processing light EL using the potential difference between the positive and negative electrodes 120 and 125. Furthermore, since the positive and negative electrodes 120 and 125 are provided on only one surface (the arrangement surface 113) of the optical member 110, the optical member 110 can be made thick, and even when high-powered laser light is used as the processing light EL, the increase in the density of the optical power within the optical member 110 can be prevented. Since the positive and negative electrodes 120 and 125 are provided on only one surface of the optical member 110, it is not necessary to make the optical member 110 thinner, provide the electrodes on both surfaces of the optical member 110, and perform bonding of a reinforcing member accompanying the thinning of the optical member 110, and the spatial light modulation element can be easily fabricated. The positive and negative electrodes 120 and 125 may be arranged adjacent to each other in the X direction. The arrangement surface 113 of the optical member 110 may intersect with the Y-direction axis (third axis).

In addition, the optical member 110 includes the first polarization part 115 that extends in the Z direction, and the second polarization part 116 that extends in the Z direction, polarized in a different direction from the first polarization part 115, and located adjacent to the first polarization part 115 on the side in the X direction. The position in the optical member 110 where the positive electrode 120 is provided has a different refractive index from the position in the optical member 110 where the negative electrode 125 is provided. The diffraction grating 117 having the pitch direction in the X direction is generated in the optical member 110 due to the change in refractive index within the optical member 110. The polarization reversal structure, which is easily fabricated with a long period, is added to the optical member 110 formed using the ferroelectric material, whereby the drive voltage required to obtain the desired diffraction efficiency can be lowered, and the processing light EL can be modulated at high speed.

In addition, the positive and negative electrodes 120 and 125 (first and second electrodes) are provided in the portion of the arrangement surface 113 of the optical member 110 where the first polarization part 115 is located. The electric field is generated in the first polarization part 115, directed from the positive electrode 120 to the negative electrode 125. The positive and negative electrodes 120 and 125 (third and fourth electrodes) are provided in the portion of the arrangement surface 113 of the optical member 110 where the second polarization part 116 is located. The electric field is generated in the second polarization part 116, directed from the positive electrode 120 to the negative electrode 125. Thus, it is possible to generate the diffraction grating 117 with a long period (grating pitch) without narrowing the period at which the electrodes are arranged. Therefore, the thickness (interaction length) of the diffraction grating can be increased while satisfying conditions of the Q parameter for obtaining the diffraction grating of a Raman-Nath diffraction type, whereby the drive voltage required to obtain the desired diffraction efficiency can be lowered, and the processing light EL can be modulated at high speed.

Furthermore, the processing light EL incident on the optical member 110 passes through a region in the optical member 110 where the refractive index changes in the direction intersecting with the X direction. At this time, the processing light EL incident from the incident plane 111 of the optical member 110 is totally reflected at the positions of the positive and negative electrodes 120 and 125 on the arrangement surface 113, and is exited from the exit plane 112. Thus, the interaction between the processing light EL and the electric field can be easily obtained, whereby the drive voltage required to obtain the desired diffraction efficiency can be lowered, and the processing light EL can be modulated at high speed.

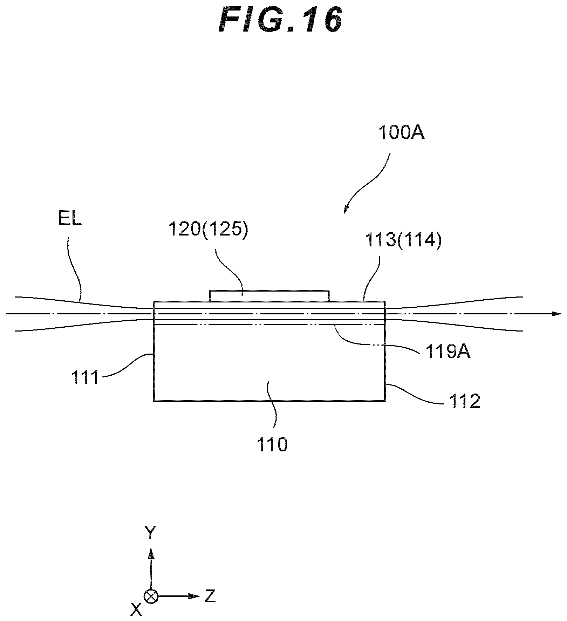

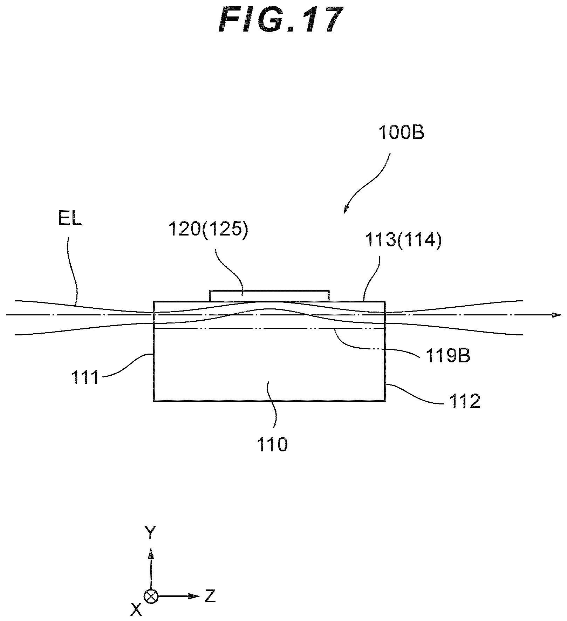

In the first embodiment described above, the processing light EL incident from the incident plane 111 of the optical member 110 is totally reflected at the positions of the positive and negative electrodes 120 and 125 on the arrangement surface 113, but is not limited thereto. The optical member 110 may include a slab waveguide provided such that the processing light EL incident from the incident plane 111 passes through the region in the optical member 110 where the refractive index changes. The slab waveguide allows the optical path of the processing light EL to continue close to the electrode, and thus the interaction between the processing light EL and the electric field can be obtained over a long distance. Therefore, the drive voltage required to obtain the desired diffraction efficiency can be lowered, and the processing light EL can be modulated at high speed. In this case, as in a spatial light modulation element 100A shown in FIG. 16, a slab waveguide 119A may be provided such that the processing light EL incident from the incident plane 111 passes linearly in parallel to the arrangement surface 113. As in a spatial light modulation element 100B shown in FIG. 17, a slab waveguide 119B may be provided such that the processing light EL incident from the incident plane 111 is totally reflected at the positions of the positive and negative electrodes 120 and 125 on the arrangement surface 113 and passes through.

In the first embodiment described above, the diffraction grating of the Raman-Nath diffraction type is generated in the spatial light modulation element 100, but a diffraction grating of a Bragg diffraction type can also be generated without being limited thereto.

[Second Embodiment]

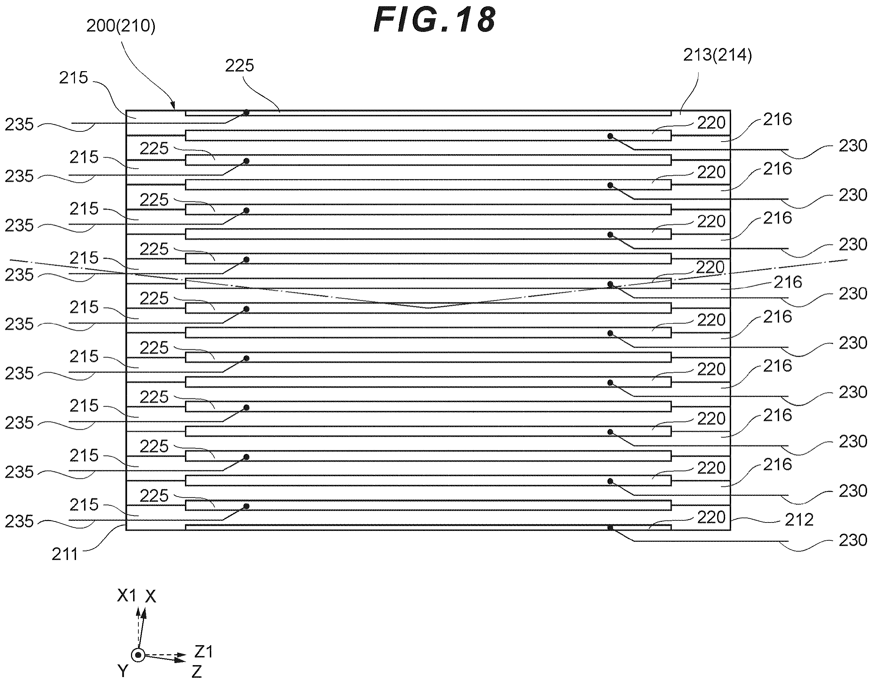

The spatial light modulation element applicable to the light processing devices 1, 51, and 61 described above is not limited to the spatial light modulation element 100 according to the first embodiment, but may be any of spatial light modulation elements according to subsequent second to sixth embodiments. Next, a spatial light modulation element according to a second embodiment will be described. The spatial light modulation element according to the second embodiment is a line-type electro-optic spatial light modulation element having a configuration advantageous for Bragg diffraction. As shown in FIGS. 18 to 20, a spatial light modulation element 200 according to the second embodiment comprises an optical member 210, a plurality of positive electrodes 220, a plurality of negative electrodes 225, a plurality of positive wires 230, and a plurality of negative wires 235. The spatial light modulation element 200 modulates a sheet-shaped processing light EL of which cross section is shaped into a flattened ellipse, and exits the light.

In the second embodiment, directions indicated by arrows in FIG. 18 may be referred to as an X direction, a Y direction, and a Z direction, respectively. The X direction, the Y direction, and the Z direction are directions that are orthogonal to one another. The spatial light modulation element 200 according to the second embodiment is arranged to be inclined (rotated) around the Y axis by a Bragg angle with respect to the traveling direction (Z direction) of the processing light EL. A direction inclined by the Bragg angle in the Z direction may be referred to as a Z1 direction, and a direction inclined by the Bragg angle in the X direction may be referred to as an X1 direction. The X1 direction, the Y direction, and the Z1 direction are directions that are orthogonal to one another.

The optical member 210 is formed in the same manner as the optical member 110 according to the first embodiment. An incident plane 211 is formed at one end (in a - Z1 direction) of the optical member 210. The processing light EL having a sheet shape (ellipse in cross section) traveling in the Z direction is incident on the incident plane 211 as incident light. In addition, the Z direction may be referred to as a first axis direction, and the incident plane 211 may intersect with a first axis. The Z1 direction may be referred to as a direction along the first axis. An exit plane 212 is formed at an end (in the + Z1 direction) of the optical member 210 opposite to the incident plane 211. The light incident on the inside of the optical member 210 from the incident plane 211 is exited from the exit plane 212.

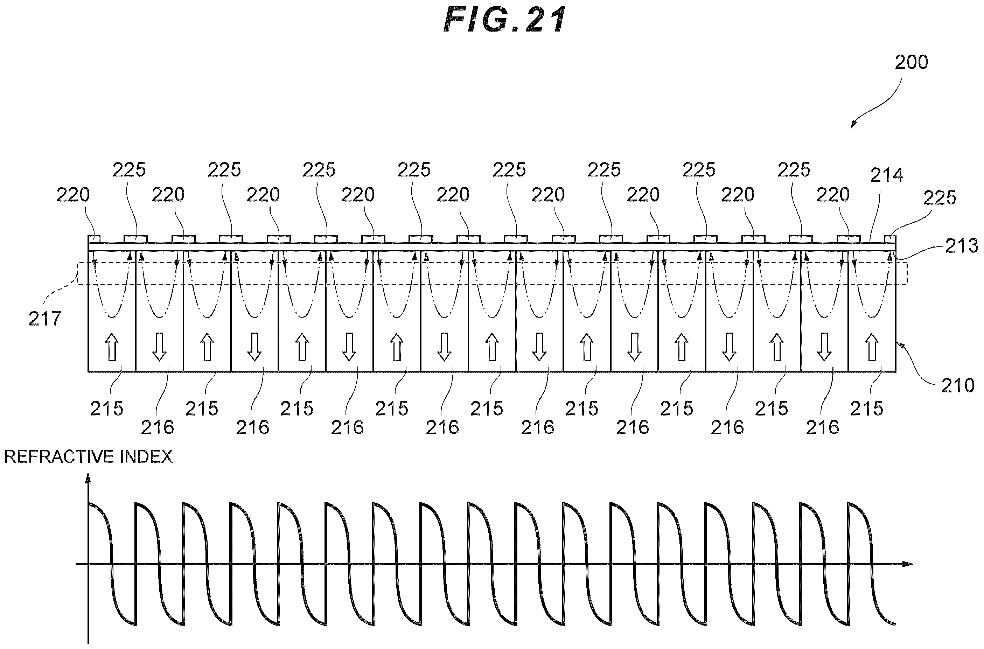

An arrangement surface 213, on which positive and negative electrodes 220 and 225 are arranged, is formed on a side surface in the + Y direction of the optical member 210. A plurality of pairs of positive and negative electrodes 220 and 225 are arranged in the X1 direction on the arrangement surface 213. The positive and negative electrodes 220 and 225 are formed using a metal material containing, for example, gold (Au). A buffer layer 214 (see FIG. 21) is formed between the arrangement surface 213 and the plurality of pairs of positive and negative electrodes 220 and 225. The buffer layer 214 is formed using, for example, silicon dioxide ($SiO_2$) . The X1 direction may be referred to as a second axis direction, and the Y direction may be referred to as a third axis direction. The arrangement surface 213 may also intersect with a third axis.

Similarly to the optical member 110 according to the first embodiment, the optical member 210 has a periodic polarization reversal structure. The optical member 210 is provided with a plurality of first polarization parts 215 extending in the Z1 direction and a plurality of second polarization parts 216 adjacent to the first polarization parts 215 and extending in the Z1 direction, which are alternately arranged side by side in the X1 direction. For example, when three lenses 24 of the lens array 23 of the light processing device are arranged side by side in the X direction, the optical member 210 may include at least nine first polarization parts 215 and at least eight second polarization parts 216. When five lenses 24 of the lens array 23 of the light processing device are arranged side by side in the X direction, the optical member 210 may include at least 15 first polarization parts 215 and at least 14 second polarization parts 216. The second polarization parts 216 are polarized in a different direction (specifically, in an opposite direction to) from the first polarization parts 215. Similarly to the optical member 110 according to the first embodiment, the periodic polarization reversal structure is provided in the optical member 210. The second polarization part 216 located adjacent to the first polarization part 215 in the - X1 direction may be referred to as a third polarization part.

The positive electrode 220 is provided at the position on the arrangement surface 213 straddling the first polarization part 215 and the second polarization part 216 (third polarization part) located adjacent to the first polarization part 215 in the - X1 direction. The positive electrode 220 is formed to extend in the Z1 direction from one end side to the other end side of the first polarization part 215 (and the third polarization part). The negative electrode 225 is provided at the position on the arrangement surface 213 straddling the first polarization part 215 and the second polarization part 216 located adjacent to the first polarization part 215 in the + X1 direction. The negative electrode 225 is formed to extend in the Z1 direction parallel to the positive electrode 220 from one end side to the other end side of the first polarization part 215 (and the second polarization part 216). It can also be said that the positive electrode 220 is provided at the position on the arrangement surface 213 straddling the second polarization part 216 and the first polarization part 215 located adjacent to the second polarization part 216 in the + X1 direction (the opposite side to the negative electrode 225). The positive electrode 220 straddling the second polarization part 216 and the first polarization part 215 located adjacent to the second polarization part 216 in the + X1 direction (the opposite side to the negative electrode 225) may be referred to as a third electrode.

The plurality of positive electrodes 220 are electrically connected to the plurality of positive wires 230, respectively. The plurality of positive wires 230 are electrically connected to the drive circuit 22 described above. The plurality of positive wires 230 apply the voltages, which are supplied from the drive circuit 22, to the plurality of positive electrodes 220, respectively. When the voltage is applied to the positive electrode 220 through the positive wire 230, a potential difference can be created between the adjacent positive and negative electrodes 220 and 225. The plurality of negative electrodes 225 are electrically connected to a plurality of ground wires 235, respectively. The plurality of ground wires 235 are electrically connected to the drive circuit 22. The plurality of positive wires 230 and the plurality of ground wires 235 constitute the wiring EW described above.

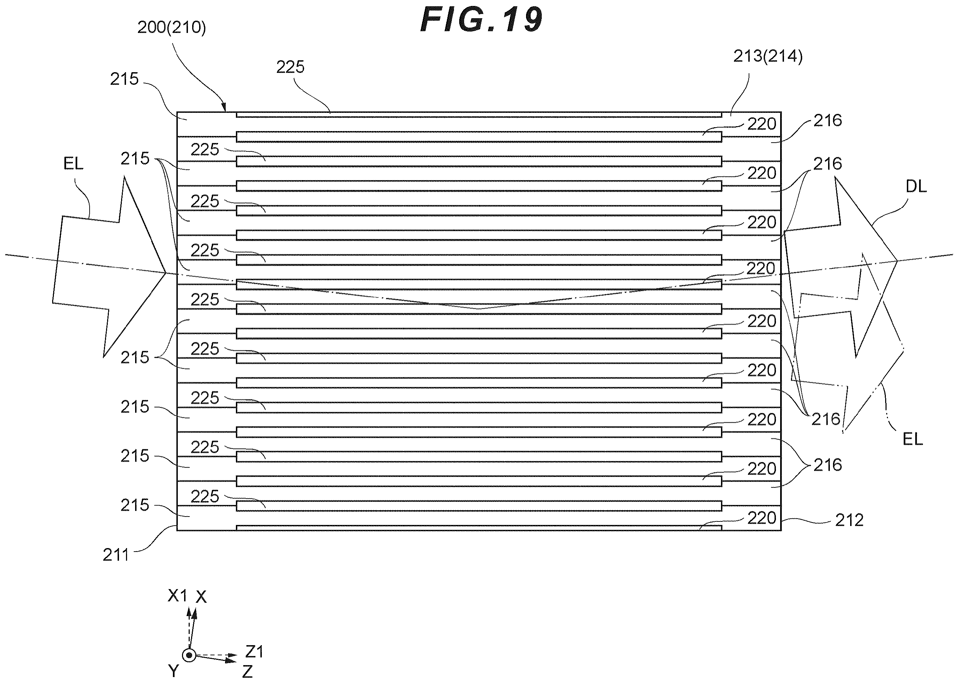

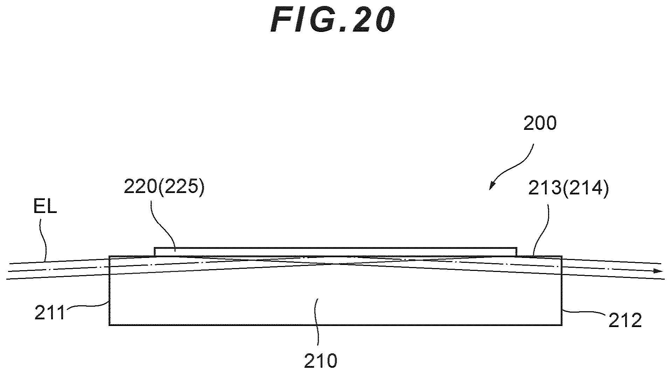

In the spatial light modulation element 200 configured as described above, the processing light EL having a sheet shape (ellipse in cross section) is incident as incident light on the incident plane 211 of the optical member 210 as shown in FIGS. 19 and 20. When no voltage is applied to the positive and negative electrodes 220 and 225, the sheet-shaped processing light EL incident on the inside of the optical member 210 from the incident plane 211 is totally reflected at positions of the positive and negative electrodes 220 and 225 on the arrangement surface 213, and is exited from the exit plane 212 as zeroth order diffracted light.

As shown in FIG. 21, when a voltage (a voltage lower than the polarization reversal voltage described above) is applied to the positive electrode 220 through the positive wire 230, a potential difference is generated between the adjacent positive and negative electrodes 220 and 225, and an electric field is generated inside the optical member 210, directed from the positive electrode 220 to the negative electrode 225. As described above, the optical member 210 has the periodic polarization reversal structure. In FIG. 21, the polarization directions in the first polarization part 215 and the second polarization part 216 are schematically indicated by thick arrows. A graph shown in FIG. 21 also shows changes in refractive index in the first polarization part 215 and the second polarization part 216.

A voltage is applied to the positive electrode 220 straddling the first polarization part 215 and the second polarization part 216 (third polarization part) located adjacent to the first polarization part 215 in the - X1 direction. Then, an electric field is generated from the positive electrode 220 toward the first polarization part 215 in a portion of the arrangement surface 213 where the first polarization part 215 is located, and the electric field gradually changes in direction and moves toward the negative electrode 225 adjacent in the + X1 direction. The refractive index in the first polarization part 215 changes due to the electro-optic effect as the electric field moves from the positive electrode 220 toward the negative electrode 225 adjacent in the + X1 direction. The refractive index of a region in the first polarization part 215 near the arrangement surface 213 changes in the X1 direction, for example, such that the refractive index is higher at a position closer to the positive electrode 220 and is lower at a position closer to the negative electrode 225.

A voltage is applied to the positive electrode 220 (third electrode) straddling the second polarization part 216 and the first polarization part 215 located adjacent to the second polarization part 216 in the + X1 direction. Then, an electric field is generated from the positive electrode 220 toward the negative electrode 225 in a portion of the arrangement surface 213 where the second polarization part 216 is located, and the electric field gradually changes in direction and moves toward the negative electrode 225 adjacent in - X1 direction. The refractive index in the second polarization part 216 changes due to the electro-optic effect as the electric field moves from the positive electrode 220 toward the negative electrode 225 adjacent in - X1 direction. The second polarization part 216 is polarized in a different direction (specifically, in an opposite direction to) from the first polarization part 215. Therefore, the refractive index of a region in the second polarization part 216 near the arrangement surface 213 changes in the X1 direction, for example, such that the refractive index is lower at the position closer to the positive electrode 220 and is higher at the position closer to the negative electrode 225. A diffraction grating 217 having a pitch direction in the X1 direction is generated in a region where the refractive index changes inside the optical member 210 (the first polarization part 215 and the second polarization part 216).

In a state where the voltage is applied to the positive electrode 220, the sheet-shaped processing light EL incident on the inside of the optical member 210 from the incident plane 211 is diffracted by Bragg diffraction in the region where the diffraction grating 217 is generated (that is, the region where the refractive index changes). The diffracted light DL (for example, ± 1st order diffracted light) generated by the Bragg diffraction is totally reflected at the positions of the positive and negative electrodes 220 and 225 on the arrangement surface 213, and is exited from the exit plane 212. In this way, the spatial light modulation element 200 modulates the processing light EL incident on the incident plane 211 of the optical member 210 due to the potential difference between the adjacent positive and negative electrodes 220 and 225, and exits the diffracted light DL from the exit plane 212.

Here, comparison with the conventional spatial light modulation element 150 described in the first embodiment is performed. As described above, in the conventional spatial light modulation element 150, when the distance between the positive and negative electrodes 170 and 175 is 20 $\mu$m, the period A of the diffraction grating 167 is 40 $\mu$m.

The spatial light modulation element 200 according to the second embodiment has the periodic polarization reversal structure, and the way of the change in refractive index due to the potential difference between the positive and negative electrodes 220 and 225 is the same for the first polarization part 215 and the second polarization part 216. For this reason, the spatial light modulation element 200 according to the second embodiment has the periodic polarization reversal structure with a period of 40 $\mu$m and a duty ratio of 1:1, and the distance between the positive and negative electrodes 220 and 225 is kept at 20 $\mu$m. In this case, the period A of the diffraction grating 217 is 20 $\mu$m. In other words, the period of the diffraction grating 217 in the spatial light modulation element 200 according to the second embodiment is half the period of the diffraction grating 167 in the conventional spatial light modulation element 150. Furthermore, a periodic polarization reversal structure with a period of 40 $\mu$m and a duty ratio of 1:1 can be easily fabricated due to a relatively long period. Here, the wavelength $\lambda$ of the incident light (processing light) is 1 $\mu$m, and the refractive index n of the crystal (optical member 210) at the wavelength $\lambda$ $\lambda$ = 1 $\mu$m) is 2.2. The thickness (interaction length) L of the diffraction grating 217 is set to 2.24 mm, which is the same as the thickness (interaction length) L of the diffraction grating 117 according to the first embodiment. In this case, Q is approximately 16 from Expression (1) described above to generate a diffraction grating of a Bragg diffraction type in the spatial light modulation element 200 according to the second embodiment.

As can be seen from Expression (2), the diffraction efficiency is proportional to the square of the Bessel function of the thickness (interaction length) L of the diffraction grating. When the diffraction grating of the Bragg diffraction type is generated in the spatial light modulation element 200 according to the second embodiment, the thickness (interaction length) L of the diffraction grating 217 can be made larger than 2.24 mm, and therefore the desired diffraction efficiency can be obtained at a lower voltage than when the conventional spatial light modulation element 150 is used. Furthermore, since the desired diffraction efficiency can be obtained with a low voltage, the burden on the drive circuit can be reduced and the processing light EL can be modulated at high speed. In addition, since the period of the diffraction grating 217 is shortened, the processing light EL can be modulated precisely.

As described in the first embodiment, in order to independently modulate some of the incident light, taking into account a divergence angle of the light source, it is necessary to change the refractive index of the diffraction grating by three or more periods, that is, it is necessary to collectively control at least three pairs of positive and negative electrodes in the second embodiment. In the spatial light modulation element 200 according to the second embodiment, the plurality of positive electrodes 220 are electrically connected to the drive circuit 22 individually through the plurality of positive wires 230. The plurality of negative electrodes 225 are electrically connected to the drive circuit 22 individually through the plurality of ground wires 235. The drive circuit 22 independently controls the voltage for each control group including at least three pairs of positive and negative electrodes 220 and 225, whereby it is possible to independently modulate some of the incident light (processing light EL).

For example, when three lenses 24 of the lens array 23 of the light processing device are arranged side by side in the X direction, a voltage is applied to the positive electrodes 220 of first to three pairs of positive and negative electrodes 220 and 225 counting from the bottom of the paper in FIG. 19, whereby the 1/3 light of the sheet-shaped processing light EL on the end side in the -X direction may be independently modulated, and the diffracted light DL may be exited from the exit plane 212. A voltage is applied to the positive electrode 220 of fourth to sixth pairs of positive and negative electrodes 220 and 225 counting from the bottom of the paper in FIG. 19, whereby the 1/3 light of the sheet-shaped processing light EL on the central side may be independently modulated, and the diffracted light DL may be exited from the exit plane 212. A voltage is applied to the positive electrode 220 of seventh to ninth pairs of positive and negative electrodes 220 and 225 counting from the bottom of the paper in FIG. 19, whereby the 1/3 light of the sheet-shaped processing light EL on the end side in the + X direction may be independently modulated, and the diffracted light DL may be exited from the exit plane 212.

The positive and negative electrodes 220 and 225 are arranged side by side in the X1 direction, which is inclined by a Bragg angle with respect to the X direction in which the lenses 24 of the lens array 23 are aligned. When three lenses 24 of the lens array 23 are arranged side by side in the X direction, the lens 24 located on the end side in the - X direction may be arranged opposite the portion (exit plane 212) of the optical member 210 in which the above-described first to third pairs of positive and negative electrodes 220 and 225 are arranged. The lens 24 located on the central side may be arranged opposite the portion (exit plane 212) of the optical member 210 in which the above-described fourth to sixth pairs of positive and negative electrodes 220 and 225 are arranged. The lens 24 located on the end side in the + X direction may be arranged opposite the portion (exit plane 212) of the optical member 210 in which the above-described seventh to ninth pairs of positive and negative electrodes 220 and 225 are arranged.

[Characteristic Configuration of Second Embodiment]

The spatial light modulation element 200 according to the second embodiment comprises the optical member 210 on which the processing light EL traveling in the Z direction (along the first axis) is incident as the incident light and which is formed using the ferroelectric material having light transmittance, the positive and negative electrodes 220 and 225 that are arranged on the arrangement surface 213 of the optical member 210 in the X1 direction (along the second axis), and the wiring (the positive wire 230 and the ground wire 235) through which the voltage is applied to the positive electrode 220 to create the potential difference between the positive and negative electrodes 220 and 225. In other words, the spatial light modulation element 200 according to the second embodiment comprises the optical member 210 and the positive and negative electrodes 220 and 225, and when the potential difference is generated between the positive and negative electrodes 220 and 225, the refraction index within the optical member 210 changes in the X direction.

Thus, it is possible to modulate the processing light EL (incident light) at high speed by modulating the processing light EL using the potential difference between the positive and negative electrodes 220 and 225. Furthermore, since the positive and negative electrodes 220 and 225 are provided on only one surface (the arrangement surface 213) of the optical member 210, the optical member 210 can be made thick, and even when high-powered laser light is used as the processing light EL, the increase in the density of the optical power within the optical member 210 can be prevented. Since the positive and negative electrodes 220 and 225 are provided on only one surface of the optical member 210, it is not necessary to make the optical member 210 thinner, provide the electrodes on both surfaces of the optical member 210, and perform bonding of a reinforcing member accompanying the thinning of the optical member 210, and the spatial light modulation element can be easily fabricated. The positive and negative electrodes 220 and 225 may be arranged adjacent to each other in the X1 direction. The arrangement surface 213 of the optical member 210 may intersect with the Y-direction axis (third axis).

In addition, the optical member 210 includes the first polarization part 215 that extends in the Z1 direction, and the second polarization part 216 that extends in the Z1 direction, polarized in a different direction from the first polarization part 215, and located adjacent to the first polarization part 215 on the side in the X1 direction. The position in the optical member 210 where the positive electrode 220 is provided has a different refractive index from the position in the optical member 210 where the negative electrode 225 is provided. The diffraction grating 217 having the pitch direction in the X direction is generated in the optical member 210 due to the change in refractive index within the optical member 210. The polarization reversal structure, which is easily fabricated with a long period, is added to the optical member 210 formed using the ferroelectric material, whereby the drive voltage required to obtain the desired diffraction efficiency can be lowered, and the processing light EL can be modulated at high speed.

Furthermore, the positive electrode 220 is provided at the position on the arrangement surface 213 straddling the first polarization part 215 and the second polarization part 216 (third polarization part) located adjacent to the first polarization part 215 in the - X1 direction. The negative electrode 225 is provided at the position on the arrangement surface 213 straddling the first polarization part 215 and the second polarization part 216 located adjacent to the first polarization part 215 in the + X1 direction. The electric field is generated in the first polarization part 215, directed from the positive electrode 220 toward the negative electrode 225. In addition, the positive electrode 220 (third electrode part) is provided at the position on the arrangement surface 213 opposite to the negative electrode 225 of the second polarization part 216. The electric field is generated in the second polarization part 116, directed from the positive electrode 220 toward the negative electrode 225. Thus, it is possible to generate the diffraction grating 217 with a short period (grating pitch). Therefore, the thickness (interaction length) of the diffraction grating can be increased while satisfying conditions of the Q parameter for obtaining the diffraction grating of a Bragg diffraction type, whereby the drive voltage required to obtain the desired diffraction efficiency can be lowered, and the processing light EL can be modulated at high speed. In addition, since the period of the diffraction grating 217 is shortened, the processing light EL can be modulated precisely.

Furthermore, the processing light EL incident on the optical member 210 passes through a region in the optical member 210 where the refractive index changes in the direction intersecting with the X1 direction. At this time, the processing light EL incident from the incident plane 211 of the optical member 210 is totally reflected at the positions of the positive and negative electrodes 220 and 225 on the arrangement surface 213, and is exited from the exit plane 212. Thus, the interaction between the processing light EL and the electric field can be easily obtained, whereby the drive voltage required to obtain the desired diffraction efficiency can be lowered, and the processing light EL can be modulated at high speed.

In the second embodiment described above, similarly to the first embodiment, the optical member 210 may include a slab waveguide provided such that the processing light EL incident from the incident plane 211 passes through the region in the optical member 210 where the refractive index changes. The slab waveguide allows the optical path of the processing light EL to continue close to the electrode, and thus the interaction between the processing light EL and the electric field can be obtained over a long distance. Therefore, the drive voltage required to obtain the desired diffraction efficiency can be lowered, and the processing light EL can be modulated at high speed.

In the second embodiment described above, the diffraction grating of the Bragg diffraction type is generated in the spatial light modulation element 200, but a diffraction grating of a Raman-Nath diffraction type can also be generated without being limited thereto.

[Third Embodiment]

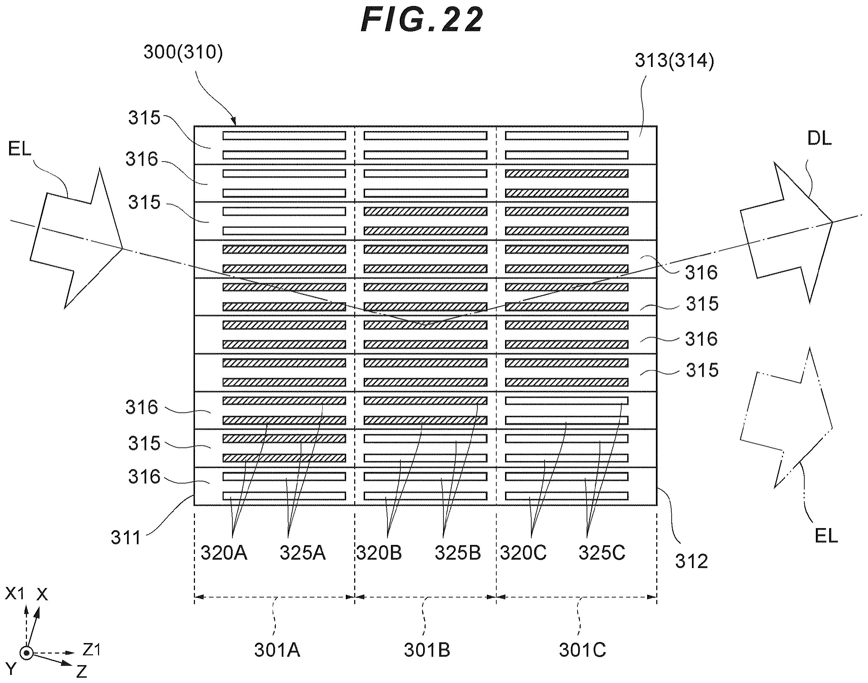

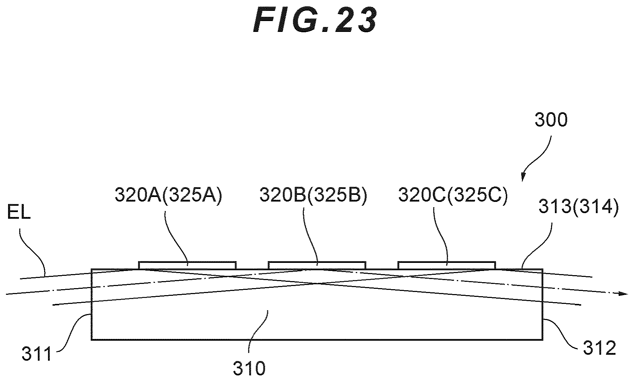

Next, a spatial light modulation element according to a third embodiment will be described. The spatial light modulation element according to the third embodiment is a line-type electro-optic spatial light modulation element that generates a diffraction grating of the Bragg diffraction type. As shown in FIGS. 22 and 23, a spatial light modulation element 300 according to the third embodiment comprises an optical member 310, a plurality of positive electrodes 320A, 320B, and 320C, a plurality of negative electrodes 325A, 325B, and 325C, a plurality of positive wires (not shown), and a plurality of negative wires (not shown). The spatial light modulation element 300 modulates a sheet-shaped processing light EL of which cross section is shaped into a flattened ellipse, and exits the light.

In the third embodiment, directions indicated by arrows in FIG. 22 may be referred to as an X direction, a Y direction, and a Z direction, respectively. The X direction, the Y direction, and the Z direction are directions that are orthogonal to one another. The spatial light modulation element 300 according to the third embodiment is arranged to be inclined (rotated) around the Y axis by a Bragg angle with respect to the traveling direction (Z direction) of the processing light EL. A direction inclined by the Bragg angle in the Z direction may be referred to as a Z1 direction, and a direction inclined by the Bragg angle in the X direction may be referred to as a X1 direction. The X1 direction, the Y direction, and the Z1 direction are directions that are orthogonal to one another.

The optical member 310 is formed in the same manner as the optical member 110 according to the first embodiment. An incident plane 311 is formed at one end (in a - Z1 direction) of the optical member 310. The processing light EL having a sheet shape (ellipse in cross section) traveling in the Z direction is incident on the incident plane 311 as incident light. In addition, the Z direction may be referred to as a first axis direction, and the incident plane 311 may intersect with a first axis. The Z1 direction may be referred to as a direction along the first axis. An exit plane 312 is formed at an end (in the + Z1 direction) of the optical member 310 opposite to the incident plane 311. The light incident on the inside of the optical member 310 from the incident plane 311 is exited from the exit plane 312.

An arrangement surface 313, on which the plurality of positive electrodes 320A, 320B, and 320C and the plurality of negative electrodes 325A, 325B, and 325C are arranged, is formed on a side surface in the + Y direction of the optical member 310. The plurality of positive electrodes 320A, 320B, and 320C and the plurality of negative electrodes 325A, 325B, and 325C are formed using a metal material containing, for example, gold (Au). As in the first embodiment, a buffer layer 314 is formed between the arrangement surface 313 and the plurality of positive electrodes 320A, 320B, and 320C and the plurality of negative electrodes 325A, 325B, and 325C.

Similarly to the optical member 110 according to the first embodiment, the optical member 310 has a periodic polarization reversal structure. The optical member 310 is provided with first polarization parts 315 extending in the Z1 direction and second polarization parts 316 adjacent to the first polarization parts 315 and extending in the Z1 direction, which are alternately arranged side by side in the X1 direction. The second polarization parts 316 are polarized in a different direction (specifically, in an opposite direction to) from the first polarization parts 315. The X1 direction may be referred to as a second axis direction, and the Y direction may be referred to as a third axis direction. The arrangement surface 313 may intersect with a third axis.

In a first region 301A at an end side in the - Z1 direction of the arrangement surface 313, a pair of positive and negative electrodes 320A and 325A are provided in each portion where the first polarization part 315 is located. The positive and negative electrodes 320A and 325A in the first region 301A are formed extending parallel to each other in the Z1 direction from one end side to the other end side of the first region 301A in the portion of the arrangement surface 313 where the first polarization part 315 is located. In addition, the negative electrode 325A in the first region 301A is arranged adjacent to the positive electrode 320A in the + X1 direction of the first region 301A. The positive and negative electrodes 320A and 325A in the first region 301A may be referred to as first and second electrodes of the first region 301A, respectively, in the portion of the arrangement surface 313 where the first polarization part 315 is located.

Furthermore, in the first region 301A of the arrangement surface 313, a pair of positive and negative electrodes 320A and 325A are provided in each portion where the second polarization part 316 is located. The positive and negative electrodes 320A and 325A in the first region 301A are formed extending parallel to each other in the Z1 direction from one end side to the other end side of the first region 301A in the portion of the arrangement surface 313 where the second polarization part 316 is located. In addition, the negative electrode 325A in the first region 301A is arranged adjacent to the positive electrode 320A in the + X1 direction of the first region 301A. The positive and negative electrodes 320A and 325A in the first region 301A may be referred to as third and fourth electrodes of the first region 301A, respectively, in the portion of the arrangement surface 313 where the second polarization part 316 is located.

In a second region 301B (a center side of the arrangement surface 313) adjacent to the first region 301A in the + Z1 direction of the arrangement surface 313, a pair of positive and negative electrodes 320B and 325B are provided in each portion where the first polarization part 315 is located. The positive and negative electrodes 320B and 325B in the second region 301B are formed extending parallel to each other in the Z1 direction from one end side to the other end side of the second region 301B in the portion of the arrangement surface 313 where the first polarization part 315 is located. In addition, the negative electrode 325B in the second region 301B is arranged adjacent to the positive electrode 320B in the + X1 direction of the second region 301B. The positive and negative electrodes 320B and 325B in the second region 301B may be referred to as first and second electrodes of the second region 301B, respectively, in the portion of the arrangement surface 313 where the first polarization part 315 is located.

Furthermore, in the second region 301B of the arrangement surface 313, a pair of positive and negative electrodes 320B and 325B are provided in each portion where the second polarization part 316 is located. The positive and negative electrodes 320B and 325B in the second region 301B are formed extending parallel to each other in the Z1 direction from one end side to the other end side of the second region 301B in the portion of the arrangement surface 313 where the second polarization part 316 is located. In addition, the negative electrode 325B in the second region 301B is arranged adjacent to the positive electrode 320B in the + X1 direction of the second region 301B. The positive and negative electrodes 320B and 325B in the second region 301B may be referred to as third and fourth electrodes of the second region 301B, respectively, in the portion of the arrangement surface 313 where the second polarization part 316 is located.

In a third region 301C adjacent to the second region 301B in the + Z1 direction of the arrangement surface 313, a pair of positive and negative electrodes 320C and 325C are provided in each portion where the first polarization part 315 is located. The positive and negative electrodes 320C and 325C in the third region 301C are formed extending parallel to each other in the Z1 direction from one end side to the other end side of the third region 301C in the portion of the arrangement surface 313 where the first polarization part 315 is located. In addition, the negative electrode 325C in the third region 301C is arranged adjacent to the positive electrode 320C in the + X1 direction of the third region 301C. The positive and negative electrodes 320C and 325C in the third region 301C may be referred to as first and second electrodes of the third region 301C, respectively, in the portion of the arrangement surface 313 where the first polarization part 315 is located.

Furthermore, in the third region 301C of the arrangement surface 313, a pair of positive and negative electrodes 320C and 325C are provided in each portion where the second polarization part 316 is located. The positive and negative electrodes 320C and 325C in the third region 301C are formed extending parallel to each other in the Z1 direction from one end side to the other end side of the third region 301C in the portion of the arrangement surface 313 where the second polarization part 316 is located. In addition, the negative electrode 325C in the third region 301C is arranged adjacent to the positive electrode 320C in the + X1 direction of the third region 301C. The positive and negative electrodes 320C and 325C in the third region 301C may be referred to as third and fourth electrodes of the third region 301C, respectively, in the portion of the arrangement surface 313 where the second polarization part 316 is located.

The positive and negative electrodes 320A and 325A in the first region 301A, the positive and negative electrodes 320B and 325B in the second region 301B, and the positive and negative electrodes 320C and 325C in the third region 301C are provided to be separated from one another in the Z1 direction. Furthermore, as shown by hatching in FIG. 22, the positive and negative electrodes 320A and 325A of the first region 301A in the first polarization part 315, the positive and negative electrodes 320B and 325B of the second region 301B in the second polarization part 316 adjacent to the first polarization part 315 in the + X1 direction, and the positive and negative electrodes 320C and 325C of the third region 301C in another first polarization part 315 adjacent to the second polarization part 316 in the + X1 direction are arranged side by side in the traveling direction of the diffracted light DL due to Bragg diffraction. The positive and negative electrodes 320A and 325A of the first region 301A in the second polarization part 316, the positive and negative electrodes 320B and 325B of the second region 301B in the first polarization part 315 adjacent to the second polarization part 316 in the + X1 direction, and the positive and negative electrodes 320C and 325C of the third region 301C in another second polarization part 316 adjacent to the first polarization part 315 in the + X1 direction are arranged side by side in the traveling direction of the diffracted light DL due to Bragg diffraction.

The plurality of positive electrodes 320A, 320B, and 320C are electrically connected to the plurality of positive wires (not shown), respectively. The plurality of positive wires are electrically connected to the drive circuit 22 described above. The plurality of positive wires apply the voltages, which are supplied from the drive circuit 22, to the plurality of positive electrodes 320A, 320B, and 320C, respectively. When the voltage is applied to the positive electrode through the positive wire, a potential difference can be created between the adjacent positive and negative electrodes. The plurality of negative electrodes 325A, 325B, and 325C are electrically connected to a plurality of ground wires (not shown), respectively. The plurality of ground wires are electrically connected to the drive circuit 22. The plurality of positive wires and the plurality of ground wires constitute the wiring EW described above.

In the spatial light modulation element 300 configured as described above, the processing light EL having a sheet shape (ellipse in cross section) is incident as incident light on the incident plane 311 of the optical member 310 as shown in FIGS. 22 and 23. When no voltage is applied to the plurality of positive electrodes 320A, 320B, and 320C and the plurality of negative electrodes 325A, 325B, and 325C, the sheet-shaped processing light EL incident on the inside of the optical member 310 from the incident plane 311 is totally reflected at the arrangement surface 313 within the optical member 310, and is exited from the exit plane 312 as zeroth order diffracted light.

When a voltage (a voltage lower than the polarization reversal voltage described above) is applied to the positive electrode 320A in the first region 301A through the positive wire (not shown), an electric field is generated from the positive electrode 320A in the first region 301A toward the negative electrode 325A, as in the first embodiment, and a refractive index within the first polarization part 315 and the second polarization part 316 located in the first region 301A changes due to an electro-optic effect. In the third embodiment, a first diffraction grating (not shown) of a Bragg diffraction type having a pitch direction in the X1 direction is generated in a region where the refractive index changes inside the optical member 310 (the first polarization part 315 and the second polarization part 316) located in the first region 301A.

When a voltage (a voltage lower than the polarization reversal voltage described above) is applied to the positive electrode 320B in the second region 301B through the positive wire (not shown), an electric field is generated from the positive electrode 320B in the second region 301B toward the negative electrode 325B, as in the first embodiment, and a refractive index within the first polarization part 315 and the second polarization part 316 located in the second region 301B changes due to an electro-optic effect. In the third embodiment, a second diffraction grating (not shown) of a Bragg diffraction type having a pitch direction in the X1 direction is generated in a region where the refractive index changes inside the optical member 310 (the first polarization part 315 and the second polarization part 316) located in the second region 301B.

When a voltage (a voltage lower than the polarization reversal voltage described above) is applied to the positive electrode 320C in the third region 301C through the positive wire (not shown), an electric field is generated from the positive electrode 320C in the third region 301C toward the negative electrode 325C, as in the first embodiment, and a refractive index within the first polarization part 315 and the second polarization part 316 located in the third region 301C changes due to an electro-optic effect. In the third embodiment, a third diffraction grating (not shown) of a Bragg diffraction type having a pitch direction in the X1 direction is generated in a region where the refractive index changes inside the optical member 310 (the first polarization part 315 and the second polarization part 316) located in the third region 301C.

In a state where the voltage is applied to the positive electrodes 320A, 320B, and 320C, the sheet-shaped processing light EL incident on the inside of the optical member 310 from the incident plane 311 is diffracted by Bragg diffraction in the region where first to third diffraction gratings are generated (that is, the region where the refractive index changes). The diffracted light DL (for example, ± 1st order diffracted light) generated by the Bragg diffraction is totally reflected at the positions of the arrangement surface 313 inside the optical member 310, and is exited from the exit plane 312. In this way, the spatial light modulation element 300 modulates the processing light EL incident on the incident plane 311 of the optical member 310 due to the potential difference between the adjacent positive and negative electrodes, and exits the diffracted light DL from the exit plane 312.

As disclosed in the document "Masahide Okazaki, Syuhei Yoshimoto, Takao Chichibu, and Toshiaki Suhara, "Electro-optic spatial light modulator using periodically-poled MgO:s-LiTaO3 waveguide", IEEE Photonics Technology Letters, vol. 27, no. 15, pp. 1646-1648, Aug. 2015.", in the Bragg diffraction it is desirable to rotate electrodes in a direction in which light is diffracted. In the third embodiment, the positive and negative electrodes 320A and 325A of the first region 301A in the first polarization part 315, the positive and negative electrodes 320B and 325B of the second region 301B in the second polarization part 316 adjacent to the first polarization part 315 in the + X1 direction, and the positive and negative electrodes 320C and 325C of the third region 301C in another first polarization part 315 adjacent to the second polarization part 316 in the + X1 direction are arranged side by side in the traveling direction of the diffracted light DL due to Bragg diffraction. The positive and negative electrodes 320A and 325A of the first region 301A in the second polarization part 316, the positive and negative electrodes 320B and 325B of the second region 301B in the first polarization part 315 adjacent to the second polarization part 316 in the + X1 direction, and the positive and negative electrodes 320C and 325C of the third region 301C in another second polarization part 316 adjacent to the first polarization part 315 in the + X1 direction are arranged side by side in the traveling direction of the diffracted light DL due to Bragg diffraction. Thus, it is possible to make a boundary of application of the voltage clear when viewed in the traveling direction of the diffracted light DL due to the Bragg diffraction.

As described in the first embodiment, in order to independently modulate some of the incident light, it is necessary to change the refractive index of the diffraction grating by three or more periods, that is, it is necessary to collectively control at least six pairs of positive and negative electrodes in the third embodiment. In the spatial light modulation element 300 according to the third embodiment, the plurality of positive electrodes 320A, 320B, and 320C are electrically connected to the drive circuit 22 individually through the plurality of positive wires (not shown). The plurality of negative electrodes 325A, 325B, and 325C are electrically connected to the drive circuit 22 individually through the plurality of ground wires (not shown). The drive circuit 22 independently controls the voltage for each control group including at least six pairs of combinations of the pair of positive and negative electrodes 320A and 325A in the first region 301A, the pair of positive and negative electrodes 320B and 325B in the second region 301B, and the pair of positive and negative electrodes 320C and 325C in the third region 301C, which are aligned in the traveling direction of the diffracted light DL due to the Bragg diffraction, whereby it is possible to independently modulate some of the incident light (processing light EL).

[Characteristic Configuration of Third Embodiment]

According to the third embodiment, it is possible to obtain the same effects as those of the first embodiment. In the spatial light modulation element 300 according to the third embodiment, the plurality of positive and negative electrodes 320A and 325A are provided in the X1 direction (along the second axis) in the first region 301A on the arrangement surface 313 of the optical member 310 to generate the first diffraction grating. The plurality of positive and negative electrodes 320B and 325B are provided in the X1 direction in the second region 301B on the arrangement surface 313 of the optical member 310 to generate the second diffraction grating. The plurality of positive and negative electrodes 320C and 325C are provided in the X1 direction in the third region 301C on the arrangement surface 313 of the optical member 310 to generate the third diffraction grating.

The positive and negative electrodes 320A and 325A in the first region 301A, the positive and negative electrodes 320B and 325B in the second region 301B, and the positive and negative electrodes 320C and 325C in the third region 301C are arranged side by side in the traveling direction of the diffracted light DL due to the Bragg diffraction. In such an arrangement (for example, the arrangement shown by hatching in FIG. 22), the first diffraction grating generated by the positive and negative electrodes 320A and 325A in the first region 301A, the second diffraction grating generated by the positive and negative electrodes 320B and 325B in the second region 301B, and the third diffraction grating generated by the positive and negative electrodes 320C and 325C in the third region 301C have different phases of the change in refractive index in the X1 direction. However, the phase of the change in refractive index of the second diffraction grating and the third diffraction grating is equal to the phase of the change in refractive index of the first diffraction grating in the direction orthogonal to the traveling direction of the diffracted light DL due to the Bragg diffraction. Thus, it is possible to make the boundary of application of the voltage clear when viewed in the traveling direction of the diffracted light DL due to the Bragg diffraction.

[Modified Example of Third Embodiment]

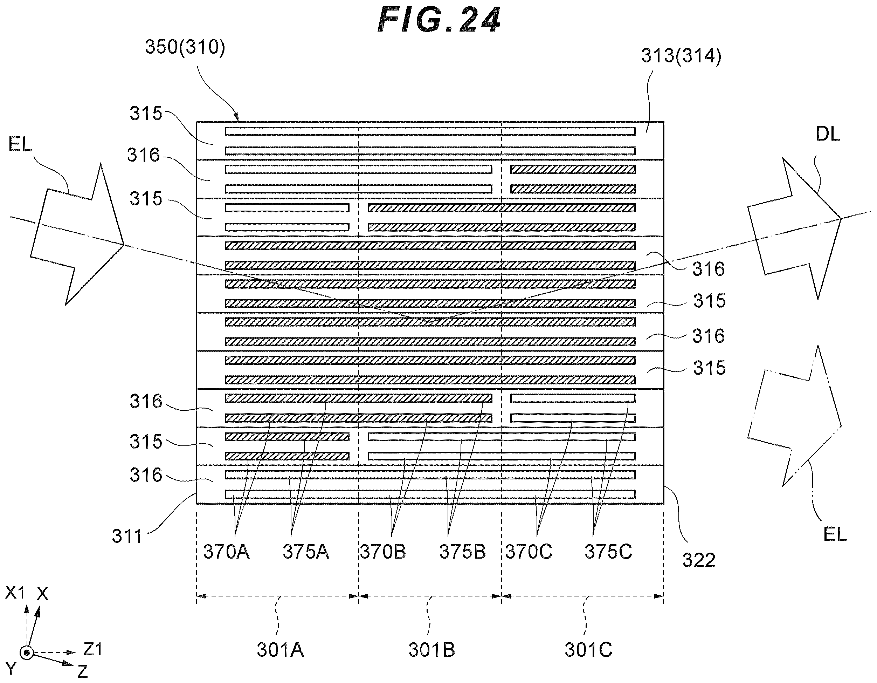

In the third embodiment described above, the positive and negative electrodes 320A and 325A in the first region 301A, the positive and negative electrodes 320B and 325B in the second region 301B, and the positive and negative electrodes 320C and 325C in the third region 301C are provided to be separated from one another in the Z1 direction, but are not limited thereto. For example, as in a spatial light modulation element 350 shown in FIG. 24, positive and negative electrodes 370A and 375A in the first region 301A, positive and negative electrodes 370B and 375B in the second region 301B, and positive and negative electrodes 370C and 375C in the third region 301C, which are aligned in the traveling direction of the diffracted light DL due to the Bragg diffraction, may be formed in which the electrodes having the same position in the X1 direction are linked.

Specifically, in an arrangement of electrodes shown by hatching in FIG. 24, a second pair of positive and negative electrodes counting in the X1 direction may be formed in which the positive and negative electrodes 370A and 375A in the first region 301A are linked to the positive and negative electrodes 370B and 375B in the second region 301B. Third to sixth pairs of positive and negative electrodes counting in the X1 direction may be formed in which the positive and negative electrodes 370A and 375A in the first region 301A, the positive and negative electrodes 370B and 375B in the second region 301B, and the positive and negative electrodes 370C and 375C in the third region 301C are linked to each other. A seventh pair of positive and negative electrodes counting in the X1 direction may be formed in which the positive and negative electrodes 370B and 375B in the second region 301B are linked to the positive and negative electrodes 370C and 375C in the third region 301C.

In the third embodiment described above, similarly to the first embodiment, the optical member 310 may include a slab waveguide provided such that the processing light EL incident from the incident plane 311 passes through the region in the optical member 310 where the refractive index changes. The slab waveguide allows the optical path of the processing light EL to continue close to the electrode, and thus the interaction between the processing light EL and the electric field can be obtained over a long distance. Therefore, the drive voltage required to obtain the desired diffraction efficiency can be lowered, and the processing light EL can be modulated at high speed.

[Fourth Embodiment]

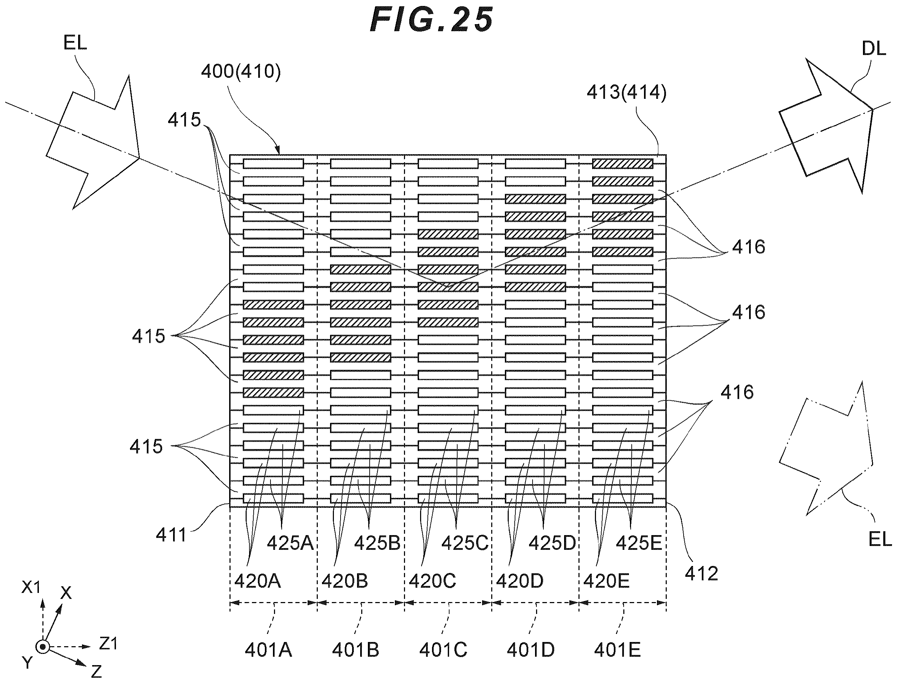

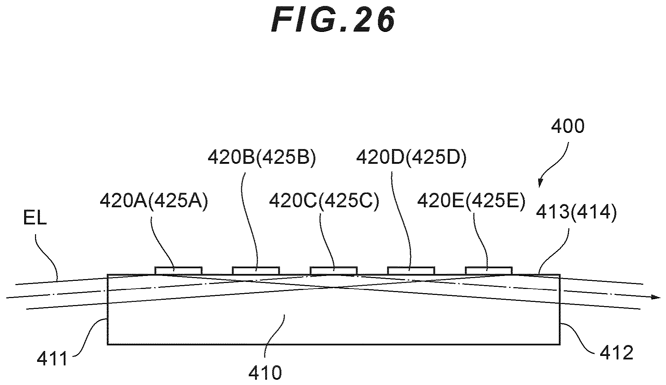

Next, a spatial light modulation element according to a fourth embodiment will be described. The spatial light modulation element according to the fourth embodiment is a line-type electro-optic spatial light modulation element that generates a diffraction grating of Bragg diffraction type. As shown in FIGS. 25 and 26, a spatial light modulation element 400 according to the fourth embodiment comprises an optical member 410, a plurality of positive electrodes 420A to 420E, a plurality of negative electrodes 425A to 425E, a plurality of positive wires (not shown), and a plurality of negative wires (not shown). The spatial light modulation element 400 modulates a sheet-shaped processing light EL of which cross section is shaped into a flattened ellipse, and exits the light.

In the fourth embodiment, directions indicated by arrows in FIG. 25 may be referred to as an X direction, a Y direction, and a Z direction, respectively. The X direction, the Y direction, and the Z direction are directions that are orthogonal to one another. The spatial light modulation element 400 according to the fourth embodiment is arranged to be inclined (rotated) around the Y axis by a Bragg angle with respect to the traveling direction (Z direction) of the processing light EL. A direction inclined by the Bragg angle in the Z direction may be referred to as a Z1 direction, and a direction inclined by the Bragg angle in the X direction may be referred to as a X1 direction. The X1 direction, the Y direction, and the Z1 direction are directions that are orthogonal to one another.

The optical member 410 is formed in the same manner as the optical member 210 according to the second embodiment. An incident plane 411 is formed at one end (in a - Z1 direction) of the optical member 410. The processing light EL having a sheet shape (ellipse in cross section) traveling in the Z direction is incident on the incident plane 411 as incident light. In addition, the Z direction may be referred to as a first axis direction, and the incident plane 411 may intersect with a first axis. The Z1 direction may be referred to as a direction along the first axis. An exit plane 412 is formed at an end (in the + Z1 direction) of the optical member 410 opposite to the incident plane 411. The light incident on the inside of the optical member 410 from the incident plane 411 is exited from the exit plane 412.

An arrangement surface 413, on which the plurality of positive electrodes 420A to 420E and the plurality of negative electrodes 425A to 425E are arranged, is formed on a side surface in the + Y direction of the optical member 410. The plurality of positive electrodes 420A to 420E and the plurality of negative electrodes 425A to 425E are formed using a metal material containing, for example, gold (Au). As in the second embodiment, a buffer layer 414 is formed between the arrangement surface 413 and the plurality of positive electrodes 420A to 420E and the plurality of negative electrodes 425A to 425E.

Similarly to the optical member 210 according to the second embodiment, the optical member 410 has a periodic polarization reversal structure. The optical member 410 is provided with first polarization parts 415 extending in the Z1 direction and second polarization parts 416 adjacent to the first polarization parts 415 and extending in the Z1 direction, which are alternately arranged side by side in the X1 direction. The second polarization parts 416 are polarized in a different direction (specifically, in an opposite direction to) from the first polarization parts 415. The X1 direction may be referred to as a second axis direction, and the Y direction may be referred to as a third axis direction. The arrangement surface 413 may intersect with a third axis.

In a first region 401A on an end side in the - Z1 direction of the arrangement surface 413, the positive electrode 420A is provided at a position straddling the first polarization part 415 and the second polarization part 416 (third polarization part) located adjacent to the first polarization part 415 in the - X1 direction. The positive electrode 420A in the first region 401A is formed to extend in the Z1 direction from one end side to the other end side of the first region 401A at the position straddling the first polarization part 415 and the second polarization part 416 (third polarization part). In the first region 401A, the negative electrode 425A is provided at a position straddling the first polarization part 415 and the second polarization part 416 located adjacent to the first polarization part 415 in the + X1 direction. The negative electrode 425A in the first region 401A is formed to extend in Z1 direction parallel to the positive electrode 420A from one end side to the other end side of the first region 401A at the position straddling the first polarization part 415 and the second polarization part 416. It can also be said that the positive electrode 420A is provided in the first region 401A at the position straddling the second polarization part 416 and the first polarization part 415 located adjacent to the second polarization part 416 in the + X1 direction (the opposite side to the negative electrode 425A). The positive electrode 420A straddling the second polarization part 416 and the first polarization part 415 located adjacent to the second polarization part 416 in the + X1 direction (the opposite side to the negative electrode 425A) may be referred to as a third electrode.

In a second region 401B adjacent to the first region 401A in the + Z1 direction on the arrangement surface 413, positive and negative electrodes 420B and 425B in the second region 401B are provided similarly to the positive and negative electrodes 420A and 425A in the first region 401A. In a third region 401C adjacent to the second region 401B in the + Z1 direction on the arrangement surface 413, positive and negative electrodes 420C and 425C in the third region 401C are provided similarly to the positive and negative electrodes 420A and 425A in the first region 401A. In a fourth region 401D adjacent to the third region 401C in the + Z1 direction on the arrangement surface 413, positive and negative electrodes 420D and 425D in the fourth region 401D are provided similarly to the positive and negative electrodes 420A and 425A in the first region 401A. In a fifth region 401E adjacent to the fourth region 401D in the + Z1 direction (on the end side in the + Z1 direction of the arrangement surface 413) on the arrangement surface 413, positive and negative electrodes 420E and 425E in the fifth region 401E are provided similarly to the positive and negative electrodes 420A and 425A in the first region 401A.

The positive and negative electrodes 420A and 425A in the first region 401A, the positive and negative electrodes 420B and 425B in the second region 401B, the positive and negative electrodes 420C and 425C in the third region 401C, the positive and negative electrodes 420D and 425D in the fourth region 401D, and the positive and negative electrodes 420E and 425E in the fifth region 401E are provided to be separated from one another in the Z1 direction. Furthermore, as shown by hatching in FIG. 25, the positive and negative electrodes 420A and 425A of the first region 401A in the first polarization part 415, the positive and negative electrodes 420B and 425B of the second region 401B in the first polarization part 415 arranged in the + X1 direction of the first polarization part 415 (through the second polarization part 416), the positive and negative electrodes 420C and 425C of the third region 401C in the first polarization part 415 arranged in the + X1 direction of the first polarization part 415 (through the second polarization part 416), the positive and negative electrodes 420D and 425D of the fourth region 401D in the first polarization part 415 arranged in the + X1 direction of the first polarization part 415 (through the second polarization part 416), and the positive and negative electrodes 420E and 425E of the fifth region 501E in the first polarization part 415 arranged in the + X1 direction of the first polarization part 415 (through the second polarization part 416) are arranged side by side in the traveling direction of the diffracted light DL due to Bragg diffraction.

The plurality of positive electrodes 420A to 420E are electrically connected to a plurality of positive wires (not shown), respectively. The plurality of positive wires are electrically connected to the drive circuit 22 described above. The plurality of positive wires apply the voltages, which are supplied from the drive circuit 22, to the plurality of positive electrodes 420A to 420E, respectively. When the voltage is applied to the positive electrode through the positive wire, a potential difference can be created between the adjacent positive and negative electrodes. The plurality of negative electrodes 425A to 425E are electrically connected to a plurality of ground wires (not shown), respectively. The plurality of ground wires are electrically connected to the drive circuit 22. The plurality of positive wires and the plurality of ground wires constitute the wiring EW described above.

In the spatial light modulation element 400 configured as described above, the processing light EL having a sheet shape (ellipse in cross section) is incident as incident light on the incident plane 411 of the optical member 410 as shown in FIGS. 25 and 26. When no voltage is applied to the plurality of positive electrodes 420A to 420E and the plurality of negative electrodes 425A to 425E, the sheet-shaped processing light EL incident on the inside of the optical member 410 from the incident plane 411 is totally reflected at the arrangement surface 413 within the optical member 410, and is exited from the exit plane 412 as zeroth order diffracted light.

When a voltage (a voltage lower than the polarization reversal voltage described above) is applied to the positive electrode 420A in the first region 401A through the positive wire (not shown), an electric field is generated from the positive electrode 420A in the first region 401A toward the negative electrode 425A, as in the second embodiment, and a refractive index within the first polarization part 415 and the second polarization part 416 located in the first region 401A changes due to an electro-optic effect. In the fourth embodiment, a first diffraction grating (not shown) of a Bragg diffraction type having a pitch direction in the X1 direction is generated in a region where the refractive index changes inside the optical member 410 (the first polarization part 415 and the second polarization part 416) located in the first region 401A.

When a voltage (a voltage lower than the polarization reversal voltage described above) is applied to the positive electrode 420B in the second region 401B through the positive wire (not shown), an electric field is generated from the positive electrode 420B in the second region 401B toward the negative electrode 425B, as in the second embodiment, and a refractive index within the first polarization part 415 and the second polarization part 416 located in the second region 401B changes due to an electro-optic effect. In the fourth embodiment, a second diffraction grating (not shown) of a Bragg diffraction type having a pitch direction in the X1 direction is generated in a region where the refractive index changes inside the optical member 410 (the first polarization part 415 and the second polarization part 416) located in the second region 401B.

When a voltage (a voltage lower than the polarization reversal voltage described above) is applied to the positive electrode 420C in the third region 401C through the positive wire (not shown), an electric field is generated from the positive electrode 420C in the third region 401C toward the negative electrode 425C, as in the second embodiment, and a refractive index within the first polarization part 415 and the second polarization part 416 located in the third region 401C changes due to an electro-optic effect. In the fourth embodiment, a third diffraction grating (not shown) of a Bragg diffraction type having a pitch direction in the X1 direction is generated in a region where the refractive index changes inside the optical member 410 (the first polarization part 415 and the second polarization part 416) located in the third region 401C.

When a voltage (a voltage lower than the polarization reversal voltage described above) is applied to the positive electrode 420D in the fourth region 401D through the positive wire (not shown), an electric field is generated from the positive electrode 420D in the fourth region 401D toward the negative electrode 425D, as in the second embodiment, and a refractive index within the first polarization part 415 and the second polarization part 416 located in the fourth region 401D changes due to an electro-optic effect. In the fourth embodiment, a fourth diffraction grating (not shown) of a Bragg diffraction type having a pitch direction in the X1 direction is generated in a region where the refractive index changes inside the optical member 410 (the first polarization part 415 and the second polarization part 416) located in the fourth region 401D.

When a voltage (a voltage lower than the polarization reversal voltage described above) is applied to the positive electrode 420E in the fifth region 401E through the positive wire (not shown), an electric field is generated from the positive electrode 420E in the fifth region 401E toward the negative electrode 425E, as in the second embodiment, and a refractive index within the first polarization part 415 and the second polarization part 416 located in the fifth region 401E changes due to an electro-optic effect. In the fourth embodiment, a fifth diffraction grating (not shown) of a Bragg diffraction type having a pitch direction in the X1 direction is generated in a region where the refractive index changes inside the optical member 410 (the first polarization part 415 and the second polarization part 416) located in the fifth region 401E.

In a state where the voltage is applied to the positive electrodes 420A to 420E, the sheet-shaped processing light EL incident on the inside of the optical member 410 from the incident plane 411 is diffracted by Bragg diffraction in the region where first to fifth diffraction gratings are generated (that is, the region where the refractive index changes). The diffracted light DL (for example, ± 1st diffracted light) generated by the Bragg diffraction is totally reflected at the positions of the arrangement surface 413 inside the optical member 410, and is exited from the exit plane 412. In this way, the spatial light modulation element 400 modulates the processing light EL incident on the incident plane 411 of the optical member 410 due to the potential difference between the adjacent positive and negative electrodes, and exits the diffracted light DL from the exit plane 412.

As described in the third embodiment, in the Bragg diffraction it is desirable to rotate electrodes in a direction in which light is diffracted. In the fourth embodiment, the positive and negative electrodes 420A and 425A of the first region 401A in the first polarization part 415, the positive and negative electrodes 420B and 425B of the second region 401B in the first polarization part 415 arranged in the + X1 direction of the first polarization part 415 (through the second polarization part 416), the positive and negative electrodes 420C and 425C of the third region 401C in the first polarization part 415 arranged in the + X1 direction of the first polarization part 415 (through the second polarization part 416), the positive and negative electrodes 420D and 425D of the fourth region 401D in the first polarization part 415 arranged in the + X1 direction of the first polarization part 415 (through the second polarization part 416), and the positive and negative electrodes 420E and 425E of the fifth region 501E in the first polarization part 415 arranged in the + X1 direction of the first polarization part 415 (through the second polarization part 416) are arranged side by side in the traveling direction of the diffracted light DL due to the Bragg diffraction. Thus, it is possible to make a boundary of application of the voltage clear when viewed in the traveling direction of the diffracted light DL due to the Bragg diffraction.

As described in the first embodiment, in order to independently modulate some of the incident light, it is necessary to change the refractive index of the diffraction grating by three or more periods, that is, it is necessary to collectively control at least three pairs of positive and negative electrodes in the fourth embodiment. In the spatial light modulation element 400 according to the fourth embodiment, the plurality of positive electrodes 420A to 420E are electrically connected to the drive circuit 22 individually through the plurality of positive wires (not shown) . The plurality of negative electrodes 425A to 425E are electrically connected to the drive circuit 22 individually through the plurality of ground wires (not shown). The drive circuit 22 independently controls the voltage for each control group including at least three pairs of combinations of the pair of positive and negative electrodes 420A and 425A in the first region 401A, the pair of positive and negative electrodes 420B and 425B in the second region 401B, the pair of positive and negative electrodes 420C and 425C in the third region 401C, the pair of positive and negative electrodes 420D and 425D in the fourth region 401D, and the pair of positive and negative electrodes 420E and 425E in the fifth region 401E, which are aligned in the traveling direction of the diffracted light DL due to the Bragg diffraction, whereby it is possible to independently modulate some of the incident light (processing light EL) .

[Characteristic Configuration of Fourth Embodiment]

According to the fourth embodiment, it is possible to obtain the same effects as those of the second embodiment. In the spatial light modulation element 400 according to the fifth embodiment, the plurality of positive and negative electrodes 420A and 425A are provided in the X1 direction (along the second axis) in the first region 401A on the arrangement surface 413 of the optical member 410 to generate the first diffraction grating. The plurality of positive and negative electrodes 420B and 425B are provided in the X1 direction in the second region 401B on the arrangement surface 413 of the optical member 410 to generate the second diffraction grating. The plurality of positive and negative electrodes 420C and 425C are provided in the X1 direction in the third region 401C on the arrangement surface 413 of the optical member 410 to generate the third diffraction grating. The plurality of positive and negative electrodes 420D and 425D are provided in the X1 direction in the fourth region 401D on the arrangement surface 413 of the optical member 410 to generate the fourth diffraction grating. The plurality of positive and negative electrodes 420E and 425E are provided in the X1 direction in the fifth region 401E on the arrangement surface 413 of the optical member 410 to generate the fifth diffraction grating.

The positive and negative electrodes 420A and 425A in the first region 401A, the positive and negative electrodes 420B and 425B in the second region 401B, the positive and negative electrodes 420C and 425C in the third region 401C, the positive and negative electrodes 420D and 425D in the fourth region 401D, and the positive and negative electrodes 420E and 425E in the fifth region 401E are arranged side by side in the traveling direction of the diffracted light DL due to the Bragg diffraction. In such an arrangement (for example, the arrangement shown by hatching in FIG. 25), the first diffraction grating generated by the positive and negative electrodes 420A and 425A in the first region 401A, the second diffraction grating generated by the positive and negative electrodes 420B and 425B in the second region 401B, the third diffraction grating generated by the positive and negative electrodes 420C and 425C in the third region 401C, the fourth diffraction grating generated by the positive and negative electrodes 420D and 425D in the fourth region 401D, and the fifth diffraction grating generated by the positive and negative electrodes 420E and 425E in the fifth region 401E have different phases of the change in refractive index in the X1 direction. However, the phase of the change in refractive index of the second to fifth diffraction gratings is equal to the phase of the change in refractive index of the first diffraction grating in the direction orthogonal to the traveling direction of the diffracted light DL due to the Bragg diffraction. Thus, it is possible to make the boundary of application of the voltage clear when viewed in the traveling direction of the diffracted light DL due to the Bragg diffraction.

[Modified Example of Fourth Embodiment]

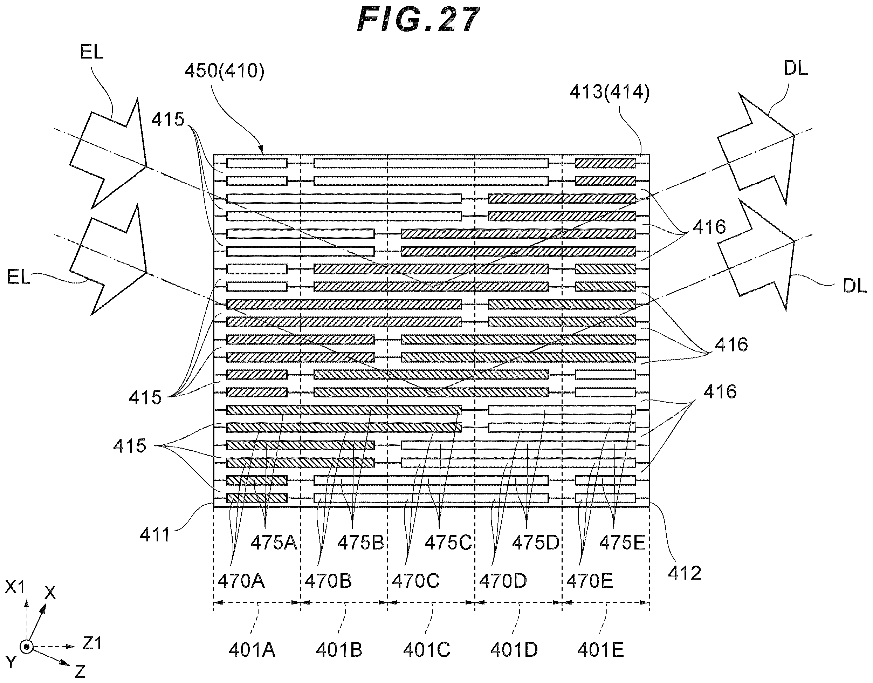

In the fourth embodiment described above, the positive and negative electrodes 420A and 425A in the first region 401A, the positive and negative electrodes 420B and 425B in the second region 401B, the positive and negative electrodes 420C and 425C in the third region 401C, the positive and negative electrodes 420D and 425D in the fourth region 401D, and the positive and negative electrodes 420E and 425E in the fifth region 401E are provided to be separated from one another in the Z1 direction, but are not limited thereto. For example, as in a spatial light modulation element 450 shown in FIG. 27, positive and negative electrodes 470A and 475A in the first region 401A, positive and negative electrodes 470B and 475B in the second region 401B, positive and negative electrodes 470C and 475C in the third region 401C, the positive and negative electrodes 470D and 475D in the fourth region 401D, and the positive and negative electrodes 470E and 475E in the fifth region 401E, which are aligned in the traveling direction of the diffracted light DL due to the Bragg diffraction, may be formed in which the electrodes having the same position in the X1 direction are linked.

Specifically, in an arrangement of electrodes shown by hatching in FIG. 27, a second pair of positive and negative electrodes counting in the X1 direction may be formed in which the positive and negative electrodes 470A and 475A in the first region 401A are linked to the positive and negative electrodes 470B and 475B in the second region 401B. A third pair of positive and negative electrodes counting in the X1 direction may be formed in which the positive and negative electrodes 470A and 475A in the first region 401A, the positive and negative electrodes 470B and 475B in the second region 401B, and the positive and negative electrodes 470C and 475C in the third region 401C are linked to each other. A fourth pair of positive and negative electrodes counting in the X1 direction may be formed in which the positive and negative electrodes 470B and 475B in the second region 401B, the positive and negative electrodes 470C and 475C in the third region 401C, and the positive and negative electrodes 470D and 475D in the fourth region 401D are linked to each other. A fifth pair of positive and negative electrodes counting in the X1 direction may be formed in which the positive and negative electrodes 470C and 475C in the third region 401C, the positive and negative electrodes 470D and 475D in the fourth region 401D, and the positive and negative electrodes 470E and 475E in the fifth region 401E are linked to each other. A sixth pair of positive and negative electrodes counting in the X1 direction may be formed in which the positive and negative electrodes 470D and 475D in the fourth region 401D are linked to the positive and negative electrodes 470E and 475E in the fifth region 401E.

In the fourth embodiment described above, similarly to the first embodiment, the optical member 410 may include a slab waveguide provided such that the processing light EL incident from the incident plane 411 passes through the region in the optical member 410 where the refractive index changes. The slab waveguide allows the optical path of the processing light EL to continue close to the electrode, and thus the interaction between the processing light EL and the electric field can be obtained over a long distance. Therefore, the drive voltage required to obtain the desired diffraction efficiency can be lowered, and the processing light EL can be modulated at high speed.

[Fifth Embodiment]

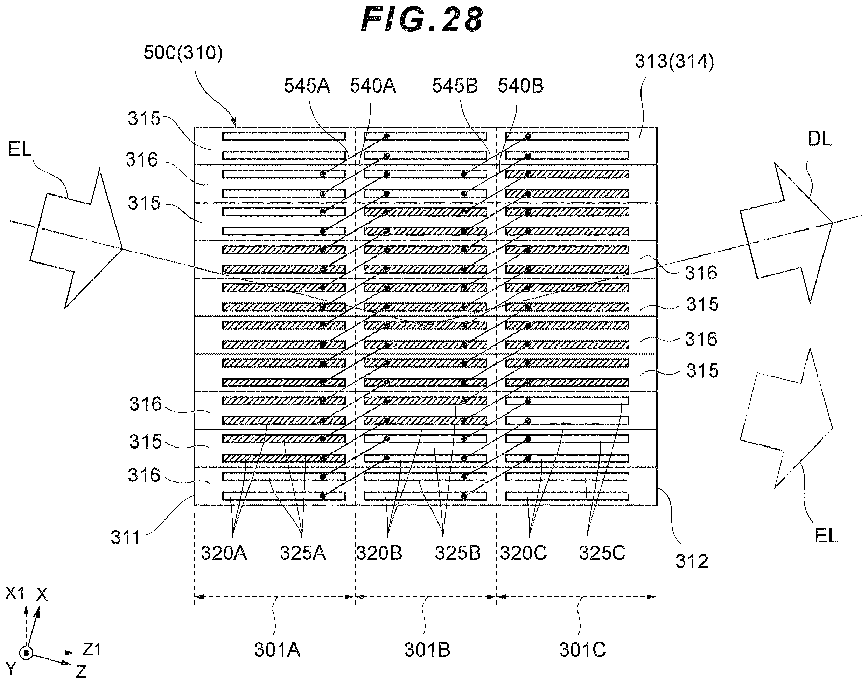

Next, a spatial light modulation element according to a fifth embodiment will be described. The spatial light modulation element according to the fifth embodiment has a configuration in which main parts are common to the spatial light modulation element 300 according to the third embodiment, except for further comprising a positive-side connecting wire and a negative-side connecting wire. Therefore, the same components as those in the third embodiment are denoted by the same reference numerals as those in the third embodiment, and will not be described in detail. As shown in FIG. 28, a spatial light modulation element 500 according to the fifth embodiment comprises an optical member 310, a plurality of positive electrodes 320A, 320B, and 320C, a plurality of negative electrodes 325A, 325B, and 325C, a plurality of positive wires (not shown), a plurality of negative wires (not shown), first and second positive-side connecting wires 540A and 540B, and first and second negative-side connecting wires 545A and 545B. The spatial light modulation element 500 modulates a sheet-shaped processing light EL of which cross section is shaped into a flattened ellipse, and exits the light.

The first positive-side connecting wire 540A electrically connects the positive electrode 320A in the first region 301A to the positive electrode 320B in the second region 301B, which are aligned in the traveling direction of the diffracted light DL due to Bragg diffraction. The second positive-side connecting wire 540B electrically connects the positive electrode 320B in the second region 301B to the positive electrode 320C in the third region 301C, which are aligned in the traveling direction of the diffracted light DL due to Bragg diffraction. Thus, the positive electrode 320A in the first region 301A, the positive electrode 320B in the second region 301B, and the positive electrode 320C in the third region 301C, which are aligned in the traveling direction of the diffracted light DL due to Bragg diffraction, are electrically connected by the first and second positive-side connecting wires 540A and 540B.

The first negative-side connecting wire 545A electrically connects the negative electrode 325A in the first region 301A to the negative electrode 325B in the second region 301B, which are aligned in the traveling direction of the diffracted light DL due to Bragg diffraction. The second negative-side connecting wire 545B electrically connects the negative electrode 325B in the second region 301B to the negative electrode 325C in the third region 301C, which are aligned in the traveling direction of the diffracted light DL due to Bragg diffraction. Thus, the negative electrode 325A in the first region 301A, the negative electrode 325B in the second region 301B, and the negative electrode 325C in the third region 301C, which are aligned in the traveling direction of the diffracted light DL due to Bragg diffraction, are electrically connected by the first and second negative-side connecting wires 545A and 545B.

A plurality of sets of positive electrodes 320A in the first region 301A, positive electrodes 320B in the second region 301B, and positive electrodes 320C in the third region 301C, which are arranged side by side in the traveling direction of the diffracted light DL due to the Bragg diffraction, are electrically connected to the plurality of positive wires (not shown). The plurality of positive wires are electrically connected to the drive circuit 22 described above. The plurality of positive wires apply the voltages, which are supplied from the drive circuit 22, to the plurality of sets of positive electrodes 320A, 320B, and 320C, which are aligned in the traveling direction of the diffracted light DL due to the Bragg diffraction, respectively. When the voltage is applied to the positive electrode through the positive wire, a potential difference can be created between the adjacent positive and negative electrodes. The plurality of sets of negative electrodes 325A in the first region 301A, negative electrodes 325B in the second region 301B, and negative electrodes 325C in the third region 301C, which are arranged side by side in the traveling direction of the diffracted light DL due to the Bragg diffraction, are electrically connected to a plurality of ground wires (not shown), respectively. The plurality of ground wires are electrically connected to the drive circuit 22. The plurality of positive wires and the plurality of ground wires constitute the wiring EW described above.

In the spatial light modulation element 500 configured as described above, the processing light EL having a sheet shape (ellipse in cross section) is incident as incident light on the incident plane 311 of the optical member 310 as in the third embodiment. When no voltage is applied to the plurality of positive electrodes 320A, 320B, and 320C and the plurality of negative electrodes 325A, 325B, and 325C, the sheet-shaped processing light EL incident on the inside of the optical member 310 from the incident plane 311 is totally reflected at the arrangement surface 313 within the optical member 310, and is exited from the exit plane 312 as zeroth order diffracted light.

When a voltage (a voltage lower than the polarization reversal voltage described above) is applied to the plurality of sets of positive electrodes 320A, 320B, and 320C, which are aligned in the traveling direction of the diffracted light DL due to the Bragg diffraction, through the plurality of positive wires (not shown), a first diffraction grating (not shown) of a Bragg diffraction type having a pitch direction in the X1 direction is generated in a region where the refractive index changes inside the optical member 310 (the first polarization part 315 and the second polarization part 316) located in the first region 301A, as in the third embodiment. A second diffraction grating (not shown) of a Bragg diffraction type having a pitch direction in the X1 direction is generated in a region where the refractive index changes inside the optical member 310 (the first polarization part 315 and the second polarization part 316) located in the second region 301B. A third diffraction grating (not shown) of a Bragg diffraction type having a pitch direction in the X1 direction is generated in a region where the refractive index changes inside the optical member 310 (the first polarization part 315 and the second polarization part 316) located in the third region 301C.

In a state where the voltage is applied to the plurality of sets of positive electrodes 320A, 320B, and 320C, the sheet-shaped processing light EL incident on the inside of the optical member 310 from the incident plane 311 is diffracted by Bragg diffraction in the region where first to third diffraction gratings are generated (that is, the region where the refractive index changes). The diffracted light DL (for example, + 1st order diffracted light) generated by the Bragg diffraction is totally reflected at the positions of the arrangement surface 313 inside the optical member 310, and is exited from the exit plane 312. In this way, the spatial light modulation element 500 modulates the processing light EL incident on the incident plane 311 of the optical member 310 due to the potential difference between the adjacent positive and negative electrodes, and exits the diffracted light DL from the exit plane 312.

[Characteristic Configuration of Fifth Embodiment]

According to the fifth embodiment, it is possible to obtain the same effects as those of the third embodiment. In the spatial light modulation element 500 according to the fifth embodiment, the positive electrode 320A in the first region 301A, the positive electrode 320B in the second region 301B, and the positive electrode 320C in the third region 301C, which are aligned in the traveling direction of the diffracted light DL due to Bragg diffraction, are electrically connected by the first and second positive-side connecting wires 540A and 540B. The negative electrode 325A in the first region 301A, the negative electrode 325B in the second region 301B, and the negative electrode 325C in the third region 301C, which are aligned in the traveling direction of the diffracted light DL due to Bragg diffraction, are electrically connected by the first and second negative-side connecting wires 545A and 545B. Thus, it is possible to make a boundary of application of the voltage clear when viewed in the traveling direction of the diffracted light DL due to the Bragg diffraction. Furthermore, as shown by hatching in FIG. 28, the voltage is applied to each of at least six sets of positive electrodes 320A, 320B, and 320C which are aligned in the traveling direction of the diffracted light DL due to the Bragg diffraction, whereby it is possible to independently modulate some of the incident light (processing light EL).

In the fifth embodiment described above, similarly to the third embodiment, the optical member 310 may include a slab waveguide provided such that the processing light EL incident from the incident plane 311 passes through the region in the optical member 310 where the refractive index changes.

[Sixth Embodiment]

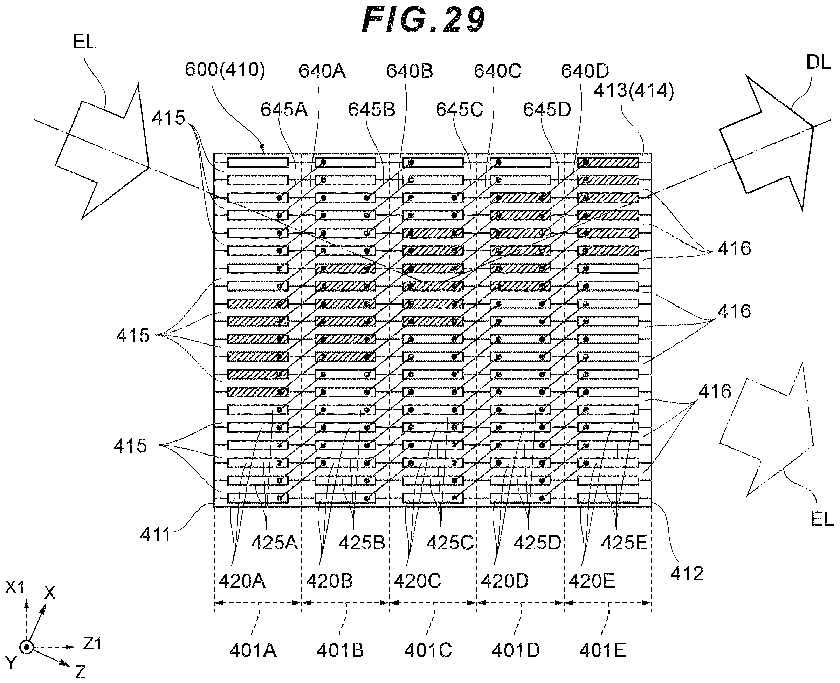

Next, a spatial light modulation element according to a sixth embodiment will be described. The spatial light modulation element according to the sixth embodiment has a configuration in which main parts are common to the spatial light modulation element 400 according to the fourth embodiment, except for further comprising a positive-side connecting wire and a negative-side connecting wire. Therefore, the same components as those in the fourth embodiment are denoted by the same reference numerals as those in the fourth embodiment, and will not be described in detail. As shown in FIG. 29, a spatial light modulation element 600 according to the sixth embodiment comprises an optical member 410, a plurality of positive electrodes 420A to 420E, a plurality of negative electrodes 425A to 425E, a plurality of positive wires (not shown), a plurality of negative wires (not shown), first to fourth positive-side connecting wires 640A to 640D, and first to fourth negative-side connecting wires 645A to 645D. The spatial light modulation element 600 modulates a sheet-shaped processing light EL of which cross section is shaped into a flattened ellipse, and exits the light.

The first positive-side connecting wire 640A electrically connects the positive electrode 420A in the first region 401A to the positive electrode 420B in the second region 401B, which are aligned in the traveling direction of the diffracted light DL due to Bragg diffraction. The second positive-side connecting wire 640B electrically connects the positive electrode 420B in the second region 401B to the positive electrode 420C in the third region 401C, which are aligned in the traveling direction of the diffracted light DL due to Bragg diffraction. The third positive-side connecting wire 640C electrically connects the positive electrode 420C in the third region 401C to the positive electrode 420D in the fourth region 401D, which are aligned in the traveling direction of the diffracted light DL due to Bragg diffraction. The fourth positive-side connecting wire 640D electrically connects the positive electrode 420D in the fourth region 401D to the positive electrode 420E in the fifth region 401E, which are aligned in the traveling direction of the diffracted light DL due to Bragg diffraction. Thus, the positive electrode 420A in the first region 401A, the positive electrode 420B in the second region 401B, the positive electrode 420C in the third region 401C, the positive electrode 420D in the fourth region 401D, and the positive electrode 420E in the fifth region 401E, which are aligned in the traveling direction of the diffracted light DL due to Bragg diffraction, are electrically connected by the first to fourth positive-side connecting wires 640A to 640D.

The first negative-side connecting wire 645A electrically connects the negative electrode 425A in the first region 401A to the negative electrode 425B in the second region 401B, which are aligned in the traveling direction of the diffracted light DL due to Bragg diffraction. The second negative-side connecting wire 645B electrically connects the negative electrode 425B in the second region 401B to the negative electrode 425C in the third region 401C, which are aligned in the traveling direction of the diffracted light DL due to Bragg diffraction. The third negative-side connecting wire 645C electrically connects the negative electrode 425C in the third region 401C to the negative electrode 425D in the fourth region 401D, which are aligned in the traveling direction of the diffracted light DL due to Bragg diffraction. The fourth negative-side connecting wire 645D electrically connects the negative electrode 425D in the fourth region 401D to the negative electrode 425E in the fifth region 401E, which are aligned in the traveling direction of the diffracted light DL due to Bragg diffraction. Thus, the negative electrode 425A in the first region 401A, the negative electrode 425B in the second region 401B, the negative electrode 425C in the third region 401C, the negative electrode 425D in the fourth region 401D, the negative electrode 425E in the fifth region 401E, which are aligned in the traveling direction of the diffracted light DL due to Bragg diffraction, are electrically connected by the first to fourth negative-side connecting wires 645A to 645D.

A plurality of sets of positive electrodes 420A in the first region 401A, positive electrodes 420B in the second region 401B, positive electrodes 420C in the third region 401C, positive electrodes 420D in the fourth region 401D, and positive electrodes 420E in the fifth region 401E, which are arranged side by side in the traveling direction of the diffracted light DL due to the Bragg diffraction, are electrically connected to the plurality of positive wires (not shown). The plurality of positive wires are electrically connected to the drive circuit 22 described above. The plurality of positive wires apply the voltages, which are supplied from the drive circuit 22, to the plurality of sets of positive electrodes 420A to 420E, which are aligned in the traveling direction of the diffracted light DL due to the Bragg diffraction, respectively. When the voltage is applied to the positive electrode through the positive wire, a potential difference can be created between the adjacent positive and negative electrodes. The plurality of sets of negative electrodes 425A in the first region 401A, negative electrodes 425B in the second region 401B, negative electrodes 425C in the third region 401C, negative electrodes 425D in the fourth region 401D, and negative electrodes 425E in the fifth region 401E, which are arranged side by side in the traveling direction of the diffracted light DL due to the Bragg diffraction, are electrically connected to a plurality of ground wires (not shown), respectively. The plurality of ground wires are electrically connected to the drive circuit 22. The plurality of positive wires and the plurality of ground wires constitute the wiring EW described above.

In the spatial light modulation element 600 configured as described above, the processing light EL having a sheet shape (ellipse in cross section) is incident as incident light on the incident plane 411 of the optical member 410 as in the fourth embodiment. When no voltage is applied to the plurality of positive electrodes 420A to 420E and the plurality of negative electrodes 425A to 425E, the sheet-shaped processing light EL incident on the inside of the optical member 410 from the incident plane 411 is totally reflected at the arrangement surface 413 within the optical member 410, and is exited from the exit plane 412 as zeroth order diffracted light.

When a voltage (a voltage lower than the polarization reversal voltage described above) is applied to the plurality of sets of positive electrodes 420A to 420E, which are aligned in the traveling direction of the diffracted light DL due to the Bragg diffraction, through the plurality of positive wires (not shown), a first diffraction grating (not shown) of a Bragg diffraction type having a pitch direction in the X1 direction is generated in a region where the refractive index changes inside the optical member 410 (the first polarization part 415 and the second polarization part 416) located in the first region 401A, as in the fourth embodiment. A second diffraction grating (not shown) of a Bragg diffraction type having a pitch direction in the X1 direction is generated in a region where the refractive index changes inside the optical member 410 (the first polarization part 415 and the second polarization part 416) located in the second region 401B. A third diffraction grating (not shown) of a Bragg diffraction type having a pitch direction in the X1 direction is generated in a region where the refractive index changes inside the optical member 410 (the first polarization part 415 and the second polarization part 416) located in the third region 401C. A fourth diffraction grating (not shown) of a Bragg diffraction type having a pitch direction in the X1 direction is generated in a region where the refractive index changes inside the optical member 410 (the first polarization part 415 and the second polarization part 416) located in the fourth region 401D. A fifth diffraction grating (not shown) of a Bragg diffraction type having a pitch direction in the X1 direction is generated in a region where the refractive index changes inside the optical member 410 (the first polarization part 415 and the second polarization part 416) located in the fifth region 401E.

In a state where the voltage is applied to the plurality of sets of positive electrodes 420A to 420E, the sheet-shaped processing light EL incident on the inside of the optical member 410 from the incident plane 411 is diffracted by Bragg diffraction in the region where first to fifth diffraction gratings are generated (that is, the region where the refractive index changes). The diffracted light DL (for example, + 1st order diffracted light) generated by the Bragg diffraction is totally reflected at the positions of the arrangement surface 413 inside the optical member 410, and is exited from the exit plane 412. In this way, the spatial light modulation element 600 modulates the processing light EL incident on the incident plane 411 of the optical member 410 due to the potential difference between the adjacent positive and negative electrodes, and exits the diffracted light DL from the exit plane 412.

[Characteristic Configuration of Sixth Embodiment]

According to the sixth embodiment, it is possible to obtain the same effects as those of the fourth embodiment. In the spatial light modulation element 600 according to the sixth embodiment, the positive electrode 420A in the first region 401A, the positive electrode 420B in the second region 401B, the positive electrode 420C in the third region 401C, the positive electrode 420D in the fourth region 401D, and the positive electrode 420E in the fifth region 401E, which are aligned in the traveling direction of the diffracted light DL due to Bragg diffraction, are electrically connected by the first to fourth positive-side connecting wires 640A to 640D. The negative electrode 425A in the first region 401A, the negative electrode 425B in the second region 401B, the negative electrode 425C in the third region 401C, the negative electrode 425E in the fourth region 401E, and the negative electrode 425E in the fifth region 401E, which are aligned in the traveling direction of the diffracted light DL due to Bragg diffraction, are electrically connected by the first to fourth negative-side connecting wires 645A to 645D. Thus, it is possible to make a boundary of application of the voltage clear when viewed in the traveling direction of the diffracted light DL due to the Bragg diffraction. Furthermore, as shown by hatching in FIG. 29, the voltage is applied to each of at least three sets of positive electrodes 420A to 420E which are aligned in the traveling direction of the diffracted light DL due to the Bragg diffraction, whereby it is possible to independently modulate some of the incident light (processing light EL).

In the sixth embodiment described above, similarly to the fourth embodiment, the optical member 410 may include a slab waveguide provided such that the processing light EL incident from the incident plane 411 passes through the region in the optical member 410 where the refractive index changes.

The negative electrodes are electrically connected to the drive circuit 22 through the ground wires in each of the above-described embodiments, but may be electrically connected to the drive circuit 22 through the negative wires without being limited thereto.

Regarding the above-described embodiments, the following Supplementary Notes are further described.

[Supplementary Note 1]

A spatial light modulation element that modulates incident light and exits the light, comprising:

an optical member that is formed using a ferroelectric material having light transmittance and includes a first polarization part extending along a first axis and a second polarization part extending along the first axis and polarized in a direction different from that of the first polarization part, the second polarization part being located adjacent to the first polarization part in a direction along a second axis intersecting with the first axis;
a first electrode that is provided on a surface of the optical member intersecting with a third axis intersecting with the first axis and the second axis; and
a second electrode that is arranged on the surface of the optical member in a direction along the second axis of the first electrode, wherein
an electric field is generated in the first polarization part, directed from the first electrode toward the second electrode, and a refractive index of the first polarization part changes along the second axis.

[Supplementary Note 2]

The spatial light modulation element according to Supplementary Note 1, wherein the incident light passes, in a direction intersecting with the second axis, through a region in the optical member where the refractive index changes.

[Supplementary Note 3]

The spatial light modulation element according to Supplementary Note 1 or 2, wherein the first electrode and the second electrode are provided at a portion on the surface of the optical member where the first polarization part is located.

[Supplementary Note 4]

The spatial light modulation element according to Supplementary Note 3, wherein an electric field is generated in the first polarization part, directed from the first electrode toward the second electrode.

[Supplementary Note 5]

The spatial light modulation element according to Supplementary Note 4, wherein the refractive index differs for each of a position in the first polarization part where the first electrode is provided in a direction of the second axis and a position in the first polarization part where the second electrode is provided in the direction of the second axis.

[Supplementary Note 6]

The spatial light modulation element according to any one of Supplementary Notes 3 to 5, further comprising: a third electrode that is arranged on the surface of the optical member in a direction along the second axis of the second electrode; and

a fourth electrode that is arranged on the surface of the optical member in the direction along the second axis of the third electrode, wherein the third electrode and the fourth electrode are provided at a portion on the surface of the optical member where the second polarization part is located.

[Supplementary Note 7]

The spatial light modulation element according to any one of Supplementary Notes 1 to 5, wherein the optical member includes a third polarization part extending along the first axis and polarized in a direction different from the first polarization part, the third polarization part being located adjacent to the first polarization part on a side opposite to the second polarization part.

[Supplementary Note 8]

The spatial light modulation element according to Supplementary Note 7, wherein the first electrode is provided at a position on the surface of the optical member straddling the first polarization part and the third polarization part, and

the second electrode is provided at a position on the surface of the optical member straddling the first polarization part and the second polarization part.

[Supplementary Note 9]

The spatial light modulation element according to Supplementary Note 8, further comprising a third electrode that is provided at a position on the surface of the optical member on a side opposite to the second electrode of the second polarization part, wherein

an electric field is generated in the first polarization part, directed from the first electrode toward the second electrode, and
an electric field is generated in the second polarization part, directed from the third electrode toward the second electrode.

[Supplementary Note 10]

The spatial light modulation element according to Supplementary Note 6 or 9, wherein the first electrode and the third electrode are electrically connected to each other.

[Supplementary Note 11]

The spatial light modulation element according to any one of Supplementary Notes 1 to 10, wherein a diffraction grating having a pitch direction along the second axis is generated in the optical member as the refractive index changes in the optical member.

[Supplementary Note 12]

The spatial light modulation element according to Supplementary Note 11, wherein a plurality of electrodes are provided along the second axis in a first region on the surface of the optical member to generate the diffraction grating, and

a plurality of electrodes are provided along the second axis in a second region adjacent to the first region on the surface of the optical member in a direction along the first axis to generate the diffraction grating.

[Supplementary Note 13]

The spatial light modulation element according to Supplementary Note 12, wherein a first diffraction grating generated by the plurality of electrodes in the first region is different in a phase of a refractive index change from a second diffraction grating generated by the plurality of electrodes in the second region.

[Supplementary Note 14]

The spatial light modulation element according to Supplementary Note 13, wherein the incident light incident on the optical member is diffracted by Bragg diffraction at the first diffraction grating, and
the phase of the refractive index change of the second diffraction grating is equal to the phase of the refractive index change of the first diffraction grating in a direction orthogonal to a traveling direction of diffracted light that is diffracted by the Bragg diffraction.

[Supplementary Note 15]

The spatial light modulation element according to any one of Supplementary Notes 1 to 14, wherein the optical member includes an incident plane that intersects with the first axis and on which the incident light is incident, and an exit plane that is located on a side opposite to the incident plane in a direction of the first axis to exit light from the optical member.

[Supplementary Note 16]

The spatial light modulation element according to Supplementary Note 15, wherein the incident light incident from the incident plane is totally reflected at positions of the first and second electrodes on the surface of the optical member and is exited from the exit plane.

[Supplementary Note 17]

The spatial light modulation element according to Supplementary Note 15, wherein the optical member includes a slab waveguide that is provided such that the incident light incident from the incident plane passes through a region in the optical member where the refractive index changes.

[Supplementary Note 18]

An optical unit comprising: the spatial light modulation element according to any one of Supplementary Notes 1 to 17; and

an optical system on which diffracted light exited from the spatial light modulation element is incident, wherein
the optical system includes a light-attenuating part that attenuates at least one of zeroth order diffracted light and diffracted light of an order different from the zeroth order diffracted light in the diffracted light.

[Supplementary Note 19]

A light processing device that processes an object using processing light emitted from a light source, comprising:

the optical unit according to Supplementary Note 18; and
an irradiation device that irradiates the object with the processing light emitted from the light source through the optical unit.

At least some of the components of each of the above-described embodiments can be appropriately combined with at least some of the other components of each of the above-described embodiments. Some of the components of each of the above-described embodiments may not be used.

The present invention is not limited to the above-described embodiments, and can be modified as appropriate within the scope of the claims and the gist or idea of the invention as can be read from the entire specification, and a spatial light modulation element, an optical unit, and a light processing device, which involve such modifications, are also intended to be within the technical scope of the present invention.

EXPLANATION OF NUMERALS AND CHARACTERS

1 light processing device
20 optical unit
51 light processing device (first modified example)
61 light processing device (second modified example)
100 spatial light modulation element (first embodiment)
110 optical member
111 incident plane
112 exit plane
113 arrangement surface
115 first polarization part
116 second polarization part
117 diffraction grating
120 positive electrode
125 negative electrode
130 positive wire
135 ground wire
119A, 119B slab waveguide
150 conventional spatial light modulation element
200 spatial light modulation element (second embodiment)
210 optical member
211 incident plane
212 exit plane
213 arrangement surface
215 first polarization part
216 second polarization part
217 diffraction grating
220 positive electrode
225 negative electrode
230 positive wire
235 ground wire

300 spatial light modulation element (third embodiment)
310 optical member
311 incident plane
312 exit plane
313 arrangement surface
315 first polarization part
316 second polarization part
320A to 320C positive electrode
325A to 325C negative electrode
350 spatial light modulation element (modified example of third embodiment)
370A to 370C positive electrode
375A to 375C negative electrode
400 spatial light modulation element (fourth embodiment)
410 optical member
411 incident plane
412 exit plane
413 arrangement surface
415 first polarization part
416 second polarization part
420A to 420E positive electrode
425A to 425E negative electrode
450 spatial light modulation element (modified example of fourth embodiment)
470A to 470E positive electrode
475A to 475E negative electrode
500 spatial light modulation element (fifth embodiment)
540A first positive-side connecting wire
540B second positive-side connecting wire
545A first negative-side connecting wire
545B second negative-side connecting wire
600 spatial light modulation element (sixth embodiment)
640A first positive-side connecting wire
640B second positive-side connecting wire
640C third positive-side connecting wire
640D fourth positive-side connecting wire
645A first negative-side connecting wire
645B second negative-side connecting wire
645C third negative-side connecting wire
645D fourth negative-side connecting wire
EW wiring

**Claims**

1. A spatial light modulation element that modulates incident light and exits the light, comprising:

   an optical member on which the incident light is incident traveling along a first axis and which is formed using a ferroelectric material having light transmittance;
   first and second electrodes that are arranged on a surface of the optical member along a second axis intersecting with the first axis; and
   a wiring through which a voltage is applied to at least one of the first and second electrodes so as to create a potential difference between the first and second electrodes.

2. The spatial light modulation element according to Claim 1, wherein
   the incident light is modulated by the potential difference between the first and second electrodes.

3. The spatial light modulation element according to Claim 1 or 2, wherein
   the first and second electrodes are adjacent to each other in a direction along the second axis.

4. The spatial light modulation element according to any one of Claims 1 to 3, wherein
   the surface of the optical member intersects with a third axis that intersects with the first axis and the second axis.

5. The spatial light modulation element according to any one of Claims 1 to 4, wherein
   a refractive index in the optical member changes along the second axis as the voltage is applied from the wiring.

6. A spatial light modulation element that modulates incident light and exits the light, comprising:

   an optical member on which the incident light is incident traveling along a first axis and which is formed using a ferroelectric material having light transmittance; and
   first and second electrodes that are arranged on a surface of the optical member along a second axis intersecting with the first axis, wherein
   when a potential difference is generated between the first and second electrodes, a refractive index in the optical member changes along the second axis.

7. The spatial light modulation element according to Claim 5 or 6, wherein
   the refractive index differs for each of a position in the optical member where the first electrode is provided in a direction of the second axis and a position in the optical member where the second electrode is provided in the direction of the second axis.

8. The spatial light modulation element according to any one of Claims 5 to 7, wherein
   a diffraction grating having a pitch direction along the second axis is generated in the optical member as the refractive index changes in the optical member.

9. The spatial light modulation element according to Claim 8, wherein

a plurality of electrodes are provided along the second axis in a first region on the surface of the optical member to generate the diffraction grating,

a plurality of electrodes are provided along the second axis in a second region adjacent to the first region on the surface of the optical member in a direction along the first axis to generate the diffraction grating, and

the plurality of electrodes include the first and second electrodes.

10. The spatial light modulation element according to Claim 9, wherein
a first diffraction grating generated by the plurality of electrodes in the first region is different in a phase of a refractive index change from a second diffraction grating generated by the plurality of electrodes in the second region.

11. The spatial light modulation element according to Claim 10, wherein

the incident light incident on the optical member is diffracted by Bragg diffraction at the first diffraction grating, and

the phase of the refractive index change of the second diffraction grating is equal to the phase of the refractive index change of the first diffraction grating in a direction orthogonal to a traveling direction of diffracted light that is diffracted by the Bragg diffraction.

12. The spatial light modulation element according to any one of Claims 5 to 11, wherein
the incident light incident on the optical member passes, in a direction intersecting with the second axis, through a region in the optical member where the refractive index changes.

13. The spatial light modulation element according to any one of Claims 1 to 12, wherein

the optical member includes

a first polarization part extending along the first axis, and

a second polarization part extending along the first axis and polarized in a direction different from that of the first polarization part, the second polarization part being located adjacent to the first polarization part in a direction along the second axis.

14. The spatial light modulation element according to Claim 13, wherein
the first and second electrodes are provided at a portion on the surface of the optical member where the first polarization part is located.

15. The spatial light modulation element according to Claim 14, wherein
an electric field is generated in the first polarization part, directed from the first electrode toward the second electrode.

16. The spatial light modulation element according to Claim 15, wherein
a refractive index differs for each of a position in the optical member where the first electrode is provided in a direction of the second axis and a position in the optical member where the second electrode is provided in the direction of the second axis.

17. The spatial light modulation element according to any one of Claims 14 to 16, further comprising
third and fourth electrodes that are provided at a portion on the surface of the optical member where the second polarization part is located.

18. The spatial light modulation element according to any one of Claims 13 to 16, wherein
the optical member includes a third polarization part extending along the first axis and polarized in a direction different from that of the first polarization part, the third polarization part being located adjacent to the first polarization part on a side opposite to the second polarization part.

19. The spatial light modulation element according to Claim 18, wherein

the first electrode is provided at a position on the surface of the optical member straddling the first polarization part and the third polarization part, and

the second electrode is provided at a position on the surface of the optical member straddling the first polarization part and the second polarization part.

20. The spatial light modulation element according to Claim 18, further comprising:

a third electrode that is provided at a position on the surface of the optical member on a side opposite to the second electrode of the second polarization part, wherein

an electric field is generated in the first polarization part, directed from the first electrode toward the second electrode, and

an electric field is generated in the second polarization part, directed from the third electrode toward the second electrode.

**21.** The spatial light modulation element according to Claim 17 or 20, wherein
the first electrode and the third electrode are electrically connected to each other.

**22.** The spatial light modulation element according to any one of Claims 1 to 21, wherein
the optical member includes an incident plane that intersects with the first axis and on which the incident light is incident, and an exit plane that is located on a side opposite to the incident plane in a direction of the first axis to exit light from the optical member.

**23.** The spatial light modulation element according to Claim 22, wherein
the incident light incident from the incident plane is totally reflected at positions of the first and second electrodes on the surface of the optical member and is exited from the exit plane.

**24.** The spatial light modulation element according to Claim 22, wherein

the refractive index in the optical member changes along the second axis as a voltage is applied to at least one of the first and second electrodes, and
the optical member includes a slab waveguide that is provided such that the incident light incident from the incident plane passes through a region in the optical member where the refractive index changes.

**25.** An optical unit comprising:

the spatial light modulation element according to any one of Claims 1 to 24; and
an optical system on which diffracted light exited from the spatial light modulation element is incident, wherein
the optical system includes a light-attenuating part that attenuates at least one of zeroth order diffracted light and diffracted light of an order different from the zeroth order diffracted light in the diffracted light.

**26.** A light processing device that processes an object using processing light emitted from a light source, comprising:

the optical unit according to Claim 25; and
an irradiation device that irradiates the object with the processing light emitted from the light source through the optical unit.

**27.** The light processing device according to Claim 26, wherein

a refractive index in the optical member changes along the second axis as a voltage is applied to at least one of the first and second electrodes, and
the light processing device further includes a shaping optical system that shapes a beam cross-sectional shape of the processing light emitted from the light source such that the processing light emitted from the light source passes through a region in the optical member where the refractive index changes along a direction intersecting with the second axis.

# FIG.1

EP 4 737 992 A1

**FIG.2**

# FIG.3

# FIG.4

FIG.5

# FIG.6

# FIG.7

# FIG.8

# FIG.9

*FIG.10*

# FIG.11

# FIG.12

# FIG.13

# FIG.14

# FIG.15

EP 4 737 992 A1

# FIG.16

# FIG.17

**FIG.18**

EP 4 737 992 A1

# FIG.19

EP 4 737 992 A1

# FIG.20

# FIG.21

REFRACTIVE INDEX

EP 4 737 992 A1

# FIG.22

300(310)    313(314)

315
316
315

316
315
316
315

316
315
316

311

EL

DL

316
315
316
315

EL

320A    325A    320B    325B    320C    325C    312

301A    301B    301C

X1 X
Y
Z1
Z

EP 4 737 992 A1

# FIG.23

# FIG.24

EP 4 737 992 A1

**FIG.25**

# FIG.26

**FIG.27**

# FIG.28

EP 4 737 992 A1

# FIG.29

EP 4 737 992 A1

## INTERNATIONAL SEARCH REPORT

| International application No. |
|---|
| **PCT/JP2023/023921** |

**A. CLASSIFICATION OF SUBJECT MATTER**

***G02F 1/05***(2006.01)i
FI:   G02F1/05 502

According to International Patent Classification (IPC) or to both national classification and IPC

**B. FIELDS SEARCHED**

Minimum documentation searched (classification system followed by classification symbols)

G02F1/00-1/125; G02F1/21-7/00; B23K26/00-26/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-097029 A (DAINIPPON SCREEN MFG. CO., LTD.) 30 April 2010 (2010-04-30) paragraphs [0026]-[0036], [0059]-[0067], fig. 2-4, 14-15 | 1-8, 12, 22-25 |
| Y | | 9-11, 13-21, 26-27 |
| Y | WO 2018/230193 A1 (SCREEN HOLDINGS CO., LTD.) 20 December 2018 (2018-12-20) paragraphs [0030]-[0041], fig. 1-4 | 9-11, 13-21 |
| Y | JP 2018-040827 A (SCREEN HOLDINGS CO., LTD.) 15 March 2018 (2018-03-15) paragraphs [0011]-[0012], fig. 1 | 13-21 |
| Y | WO 2021/172020 A1 (HAMAMATSU PHOTONICS K.K.) 02 September 2021 (2021-09-02) paragraphs [0118]-[0121], fig. 34 | 26-27 |
| A | JP 2015-052701 A (SCREEN HOLDINGS CO., LTD.) 19 March 2015 (2015-03-19) entire text, all drawings | 1-27 |
| A | JP 2020-197596 A (SCREEN HOLDINGS CO., LTD.) 10 December 2020 (2020-12-10) entire text, all drawings | 1-27 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/023921**

### C.    DOCUMENTS CONSIDERED TO BE RELEVANT

| Category* | Citation of document, with indication, where appropriate, of the relevant passages | Relevant to claim No. |
|---|---|---|
| A | US 2008/0204858 A1 (SAMSUNG ELECTRONICS CO., LTD.) 28 August 2008 (2008-08-28)<br>entire text, all drawings | 1-27 |

Form PCT/ISA/210 (second sheet) (January 2015)

## INTERNATIONAL SEARCH REPORT
### Information on patent family members

International application No.

**PCT/JP2023/023921**

| Patent document cited in search report | | | Publication date (day/month/year) | Patent family member(s) | | Publication date (day/month/year) |
|---|---|---|---|---|---|---|
| JP | 2010-097029 | A | 30 April 2010 | (Family: none) | | |
| WO | 2018/230193 | A1 | 20 December 2018 | JP 2019-3079 A | | |
| JP | 2018-040827 | A | 15 March 2018 | (Family: none) | | |
| WO | 2021/172020 | A1 | 02 September 2021 | US 2023/0075209 A1 paragraphs [0153]-[0156], fig. 34 EP 4112220 A1 CN 115210974 A KR 10-2022-0137650 A JP 2021-136316 A | | |
| JP | 2015-052701 | A | 19 March 2015 | US 2015/0070676 A1 entire text, all drawings EP 2846186 A1 CN 104423117 A KR 10-2015-0028707 A | | |
| JP | 2020-197596 | A | 10 December 2020 | (Family: none) | | |
| US | 2008/0204858 | A1 | 28 August 2008 | KR 10-2008-0079939 A | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6169565 B

- JP 5058935 B

**Non-patent literature cited in the description**

- **MASAHIDE OKAZAKI** ; **TOSHIAKI SUHARA**. High-performance 1024-pixel EO spatial light modulator using cascaded periodically-poled Raman-Nath gratings. *IEEE/OSA Journal of Lightwave Technology*, November 2015, vol. 33 (24), 5195-5200

- **MASAHIDE OKAZAKI** ; **SYUHEI YOSHIMOTO** ; **TAKAO CHICHIBU** ; **TOSHIAKI SUHARA**. Electro-optic spatial light modulator using periodically-poled MgO:s-LiTaO3 waveguide. *IEEE Photonics Technology Letters*, August 2015, vol. 27 (15), 1646-1648